# EUROPÄISCHE PATENTSCHRIFT

(11) **EP 3 832 023 B1**
(45) Veröffentlichungstag und Bekanntmachung des Hinweises auf die Patenterteilung: **10.04.2024**
(21) Anmeldenummer: 20211156.3
(22) Anmeldetag: 02.12.2020
(51) Int. Cl.: E01C 23/088, E01C 21/00

(54) **MOBILE BODENBEARBEITUNGSMASCHINE, UMFASSEND EINE WERKZEUGLOS MIT EINEM MASCHINENRAHMEN LÖSBAR KOPPELBARE FUNKTIONSVORRICHTUNG**
MOBILE SOIL WORKING MACHINE, COMPRISING A FUNCTIONAL DEVICE DECOUPLABLE TOOL-FREE FROM THE MACHINE FRAME
MACHINE MOBILE DE TRAITEMENT DE SOL, COMPRENANT UN DISPOSITIF FONCTIONNEL DÉCOUPLABLE SANS OUTILLAGE DU CHÂSSIS DE MACHINE

(30) Priorität: 06.12.2019 DE 102019133444
(43) Veröffentlichungstag der Anmeldung: 09.06.2021
(73) Patentinhaber: Wirtgen GmbH, 53578 Windhagen (DE)
(72) Erfinder: Lull, Roland, 53639 Königswinter (DE); Joisten, Marcel, 56566 Neuwied (DE); Freund, Oliver, 53639 Königswinter (DE)
(74) Vertreter: Ruttensperger Lachnit Trossin Gomoll

(56) Entgegenhaltungen:
- DE-U1-202009 003 824
- US-A- 4 834 463
- US-A- 6 076 895
- US-A1- 2016 186 390
- US-A1- 2018 215 595

## Beschreibung

Die vorliegende Erfindung betrifft eine mobile Bodenbearbeitungsmaschine, wie etwa Straßenfräse, Recycler oder Surface-Miner, wie etwa Straßenfräse, Recycler oder Surface-Miner, gemäß dem Oberbegriff von Anspruch 1.

Eine solche Bodenbearbeitungsmaschine in Gestalt einer Straßenfräse ist aus der US 4,834,463 bekannt. Diese offenbart ein umlaufendes Transportband als die Funktionsvorrichtung, welche über einen vorrichtungszugeordneten Gelenkkörper an einem rahmenzugeordneten Gelenkkörper relativ zum Maschinenrahmen um eine Schwenkachse schwenkbar angeordnet ist. Der vorrichtungszugeordnete Gelenckörper weist eine schraubverbundene Flanschverbindung auf, welche eine mechanische Kopplungsstruktur bildet. Das Transportband der aus der US 4,834,463 bekannten Straßenfräse ist aktuatorisch durch eine unmittelbar am Maschinenrahmen angelenkte Kolben-Zylinder-Anordnung um eine zur Schwenkachse orthogonale Neigeachse neigbar.

Eine weitere Bodenbearbeitungsmaschine ist aus der WO 2013/048854 A bekannt, welche eine Straßenfräse mit einer eine Fräswalze umfassenden Arbeitsvorrichtung und mit einer Transportvorrichtung als Funktionsvorrichtung zeigt. Die Transportvorrichtung ist um eine zur Gierachse der Bodenbearbeitungsmaschine parallele Schwenkachse schwenkbar am Maschinenrahmen angelenkt und dient zum Abtransport von Fräsgut von der Arbeitsvorrichtung.

Aus der US 2016/0186390 A1 ist ein Beschicker bekannt, an dem ein Längsförderer einhängbar ist.

Die DE 20 2009 003 824 U1 offenbart einen Surface-Miner mit einem schwenkbaren und aktuatorisch neigbaren Transportband. Eine mechanische Kopplungsstruktur ist an diesem bekannten Surface-Miner nicht zu erkennen.

Eine weitere Straßenfräse, genauer Straßenkaltfräse, mit einer Transportvorrichtung zum Abtransport von Fräsgut, also abgetragenem Straßenmaterial, als Funktionsvorrichtung ist aus der US 10,190,270 B2 bekannt. Auch hier ist die Schwenkachse der Funktionsvorrichtung in Bezug zum Maschinenrahmen gierachsenparallel. Diese Druckschrift offenbart außerdem zwei Kolben-Zylinder-Anordnungen als Aktuatoren zur aktuatorischen Schwenkverlagerung der Funktionsvorrichtung relativ zum Maschinenrahmen, um etwa einen maschinenrahmenfernen Abgabeort der fachüblich als Förderband ausgestalteten Transportvorrichtung einem Begleitfahrzeug zu- oder nachführen zu können.

Die Transportvorrichtungen zum Abtransport von abgetragenem Bodenmaterial aus der Umgebung der Arbeitsvorrichtung können zusätzlich um bodenparallele Knickachsen knickbar sein, um die Abmessungen der Bodenbearbeitungsmaschine für einen Transport, verglichen mit den Abmessungen der für eine Bodenbearbeitung betriebsbereiten Bodenbearbeitungsmaschine, zu verringern.

Durch derartige Maßnahmen können, ebenso wie durch ein heb- und senkbares Schutzdach, die Außenabmessungen der Bodenbearbeitungsmaschine verringert werden, nicht jedoch ihr Gewicht.

In vielen Ländern besteht ein Grenz-Transportgewicht, ab dessen Überschreitung für einen Transport der zu transportierenden Sache eine behördliche Sondergenehmigung zu beantragen ist. Derartige Verwaltungsvorgänge sind zeit- und ressourcenraubend.

Es ist daher Aufgabe der vorliegenden Erfindung, die eingangs genannte Bodenbearbeitungsmaschine derart weiterzubilden, dass nicht nur ihre Außenabmessungen, sondern auch das Gewicht von als montierter Einheit zu transportierenden Maschinenbestandteilen, ausgehend von dem für eine Bodenbearbeitung betriebsbereiten Bezugszustand der Gesamtmaschine schnell und unkompliziert deutlich verringerbar ist, etwa um ein genehmigungsfreies Maximal-Transportgewicht der Bodenbearbeitungsmaschine nicht zu überschreiten.

Diese Aufgabe löst die vorliegende Erfindung durch eine Bodenbearbeitungsmaschine mit den Merkmalen des Anspruchs 1. Aus der US 4,834,463 ist bereits bekannt, dass zwischen dem Maschinenrahmen und der Funktionsvorrichtung eine mechanische Kopplungsstruktur ausgebildet ist, mittels welcher die Funktionsvorrichtung bestimmungsgemäß körperlich lösbar mit dem Maschinenrahmen gekoppelt ist, wobei die Kopplungsstruktur eine rahmenseitige Kopplungsformation aufweist, welche mit dem Maschinenrahmen verbunden ist, und eine vorrichtungsseitige Gegenkopplungsformation aufweist, welche mit der Funktionsvorrichtung verbunden ist, wobei die Kopplungsstruktur derart mit Abstand vom Schwenkgelenk ausgebildet ist, dass die rahmenseitige Kopplungsformation und die vorrichtungsseitige Gegenkopplungsformation beide am vorrichtungszugeordneten Gelenkkörper ausgebildet sind.

Somit kann die Funktionsvorrichtung vom Maschinenrahmen körperlich getrennt werden, sodass aus einem einzigen Transportgegenstand, welcher das genehmigungsfreie maximale Transportgewicht überschreitet, mit geringem Aufwand und in kurzer Zeit zwei Transportgegenstände geschaffen werden können, von welchen jeder ein geringeres Gewicht als das genehmigungsfreie maximale Transportgewicht aufweist. Die Möglichkeit zum sofortigen genehmigungsfreien Transport überkompensiert das Erfordernis eines weiteren Transportmittels deutlich.

Die Relativbeweglichkeit der der beiden Gelenkkörper bleibt durch die Koppelbarkeit von Funktionsvorrichtung und Maschinenrahmen vorteilhaft unbeeinflusst, da das Schwenkgelenk nicht Teil der Kopplungsstruktur ist. Somit entfällt eine wiederholte Demontage und Montage des Schwenkgelenks. Diese wäre aufwendiger, als die erfindungsgemäß vorgesehene Kopplung von Funktionsvorrichtung und Maschinenrahmen unter Beibehaltung des Schwenkgelenks.

Wird gemäß einer ersten möglichen Ausgestaltung, welche nicht von der vorliegenden Erfindung umfasst ist, die Kopplungsstruktur im rahmenzugeordneten Gelenckörper angeordnet, kann eine betragsmäßig große Masse vom Maschinenrahmen abgekoppelt werden.

Wird dagegen gemäß der Erfindung die Kopplungsstruktur im vorrichtungszugeordneten Gelenkkörper angeordnet, ist zwar die vom Maschinenrahmen abkoppelbare Masse geringfügig geringer als in der oben genannten nicht erfindungsgemäße Ausgestaltung, jedoch kann dann die Montagearbeit für das An- und Abkoppeln der Funktionsvorrichtung verringert sein, was den Masse- und damit Gewichtsnachteil mehr als ausgleicht. Beispielsweise kann dann ein Lösen und ein Verbinden eines rahmenseitig angeordneten, rahmenseitig versorgten und das Schwenkgelenk übergreifenden Verbrauchers entfallen. Ein solcher Verbraucher kann durch eine unten beschriebene Aktuatorvorrichtung oder/und durch eine an wenigstens einem der Gelenkkörper angeordnete Sensorvorrichtung gebildet sein

Mit dem Begriff "Gelenkkörper" ist eine einseitig funktional von dem Schwenkgelenk ausgehende körperliche Struktur bezeichnet. Diese kann einstückig mit der übrigen einschlägigen Struktur aus Maschinenrahmen und Funktionsvorrichtung verbunden sein. So kann beispielsweise der rahmenzugeordnete Gelenkkörper einstückig mit dem übrigen Maschinenrahmen zusammenhängen. Die beiden Gelenkkörper: rahmenzugeordneter und vorrichtungszugeordneter Gelenkkörper, sind durch das Schwenkgelenk relativ zueinander schwenkbar verbunden. Die Aufteilung der Gelenkkörper sowie der weiter unten genannten Aktuatorvorrichtung-Verbindungsorte: Anlenkort und Abstützort, in einen rahmenzugeordneten und einen vorrichtungszugeordneten Gelenkkörper bzw. Verbindungsort erfolgt mit Bezug auf die Schwenkachse, je nachdem, ob ein Gelenkkörper bzw. ein Verbindungsort bezüglich der Schwenkachse auf der Seite des Maschinenrahmens oder auf der Seite der Funktionsvorrichtung gelegen ist.

Mit dem Begriff "Kopplung" sowie Begriffen dieser Wortfamilie ist dabei eine Möglichkeit zum bestimmungsgemäßen wiederholten Verbinden und Lösen zweier Bauteile oder Baugruppen oder/und eine bestimmungsgemäß lösbare und erneut herstellbare Verbindung zweier Bauteile oder zweier Baugruppen bezeichnet. Mit Ausnahme der Gelenkkörper sowie der Aktuatorvorrichtung-Verbindungsorte: Anlenkort und Abstützort, bezieht sich die Einteilung weiterer Bauteile und Baugruppen als rahmenseitig oder vorrichtungsseitig auf deren Lage relativ zur Kopplungsstruktur, je nachdem ob das Bauteil bzw. die Baugruppe bezüglich der Kopplungsstruktur auf der Seite des Maschinenrahmens oder auf der Seite der Funktionsvorrichtung gelegen ist.

Da das Schwenkgelenk mit Abstand von der Kopplungsstruktur angeordnet ist und die Kopplungsstruktur vollständig in dem vorrichtungsseitigen Gelenkkörper ausgebildet ist, umfasst der vorrichtungszugeordnete Gelenkkörper einen rahmenseitigen und einen vorrichtungsseitigen Gelenkkörperabschnitt.

Wenn im Rahmen dieser Anmeldung von einem betriebsbereiten Zustand der Bodenbearbeitungsmaschine die Rede ist, so ist damit, sofern im Einzelfall nichts Abweichendes ausgesagt ist, ein zur bestimmungsgemäßen Bodenbearbeitung betriebsbereiter Zustand bezeichnet. Sofern die Bodenbearbeitungsmaschine eine mit der Arbeitsvorrichtung kooperierende Transportvorrichtung umfasst, ist auch diese Transportvorrichtung in dem bezeichneten bestimmungsgemäß für die Bodenbearbeitung betriebsbereiten Zustand für ein Zusammenwirken mit der Arbeitsvorrichtung bereit. Im Übrigen wird die Bodenbearbeitungsmaschine in einem Bezugszustand beschrieben, in welchem die Bodenbearbeitungsmaschine zur bestimmungsgemäßen Bodenbearbeitung bereit ist, sofern ausdrücklich nichts Anderes ausgesagt ist. Dabei wird unterstellt, dass die Bodenbearbeitungsmaschine auf einem ebenen horizontalen Untergrund aufsteht.

Um den Effekt der Gewichtsersparnis in möglichst großem Umfang erzielen zu können, weist die Funktionsvorrichtung bevorzugt ein Gewicht von wenigstens einer Tonne, also 1000 kg, stärker bevorzugt zwischen ein und fünf Tonnen auf. Eine gleichzeitige Abmessungs- und Gewichtsreduktion der Bodenbearbeitungsmaschine in Vorbereitung auf einen Transport kann dadurch erzielt werden, dass die Funktionsvorrichtung wenigstens eine Bodenmaterial-Transportvorrichtung umfasst oder ist. Mit dieser Bodenmaterial-Transportvorrichtung, die beispielsweise ein Transportband oder eine Förderschnecke umfassen kann, wird während der Bodenbearbei tung durch die Arbeitsvorrichtung abgetragenes Bodenmaterial räumlich von der Arbeitsvorrichtung weg gefördert.

Die Bodenbearbeitungsmaschine kann zur Überwindung längerer Transportstrecken eine mehrteilige Transportvorrichtung aufweisen, beispielsweise umfassend eine Aufnahme-Transportvorrichtung, insbesondere ein umlaufendes Aufnahmetransportband oder kurz "Aufnahmeband". Die Aufnahme-Transportvorrichtung nimmt von der Arbeitsvorrichtung abgetragenes Bodenmaterial auf und transportiert es bis zu einem Übergabeort, wo es einer Abwurf-Transportvorrichtung, insbesondere einem umlaufenden Abwurftransportband oder kurz "Abwurfband" übergeben wird. Die Abwurf-Transportvorrichtung transportiert das Bodenmaterial dann bis zu dem oben genannten Abgabeort. Da in einem solchen Fall von den genannten Transportvorrichtungen in der Regel nur die Abwurf-Transportvorrichtung schwenkbar mit dem Maschinenrahmen verbunden ist, ist bevorzugt die Abwurf-Transportvorrichtung über die Kopplungsstelle mit dem Maschinenrahmen koppelbar, während die Aufnahme-Transportvorrichtung fest am Maschinenrahmen installiert ist.

Nach dem Abkoppeln der Funktionsvorrichtung vom Maschinenrahmen kann an die verbleibende rahmenseitige Kopplungsformation anstelle der abgekoppelten Funktionsvorrichtung eine von dieser verschiedene weitere Funktionsvorrichtung angekoppelt werden. Diese weitere Funktionsvorrichtung kann der um die frühere Funktionsvorrichtung verminderten Bodenbearbeitungsmaschine die Ausführung von Tätigkeiten eröffnen, zu deren Erfüllung sie im für eine Bodenbearbeitung betriebsbereiten Zustand nicht ausgebildet ist. Somit kann durch die Kopplungsstruktur der Funktionsumfang der Bodenbearbeitungsmaschine erweitert werden. Beispielsweise kann die weitere Funktionsvorrichtung als die oben genannte Funktionsvorrichtung eine Tragevorrichtung umfassen oder sein. Mit der Tragevorrichtung kann die Bodenbearbeitungsmaschine beispielsweise ihre Arbeitsvorrichtung, die für einen Wechsel unterschiedlicher Bearbeitungsarten vorzugsweise lösbar am Maschinenrahmen gehaltert ist, tragen und aufgrund ihrer eigenen Mobilität transportieren und wieder ablegen. Somit kann durch eine solche Tragevorrichtung die Arbeitsvorrichtung ganz oder teilweise losgelöst vom Maschinenrahmen ohne weitere Hilfsmittel bewegt und insbesondere verstaut oder verladen werden, was weiter hilft, das Gewicht des Maschinenrahmens und der an ihm verbleibenden Baugruppen und Aggregate als größte und schwerste zu transportierende Baueinheit der Bodenbearbeitungsmaschine ohne zusätzlichen umfangreichen Werkzeug- und Montageaufwand schnell und unkompliziert zu verringern.

Die Arbeitsvorrichtung umfasst oder ist bevorzugt eine in Maschinenquerrichtung drehbar in einem vorzugsweise auswechselbar am Maschinenrahmen gehalterten Fräswalzenkasten angeordnete Fräswalze. Eine bevorzugte Fräswalze für Bodenbearbeitungsmaschinen weist ein Fräswalzenrohr auf, auf dessen äußerer Mantelfläche auswechselbare Fräsmeißel in Meißelhaltern aufgenommen sind. Die zur Wartungserleichterung selbst bevorzugt als Meißelwechselhalter ausgebildeten Meißelhalter sind zur Unterstützung der Abfuhr von Fräsgut besonders bevorzugt wendelförmig auf der Mantelfläche angeordnet.

Die mobile Bodenbearbeitungsmaschine weist bevorzugt einen eigenen Bewegungsantrieb auf und ist somit bevorzugt selbstfahrend, benötigt also kein Zugfahrzeug.

Grundsätzlich kann die Schwenkachse eine beliebige Orientierung im Raum aufwiesen. Eine bevorzugt einfach herzustellende Kopplung kann dadurch erhalten werden, dass die Schwenkachse parallel zu einer der kartesischen Fahrzeugkoordinatensystemachsen verläuft, also entweder parallel zu der in Maschinenrahmenlängsrichtung bodenparallel verlaufenden Rollachse, oder parallel zu der in Maschinenrahmenquerrichtung bodenparallel verlaufenden Nickachse oder parallel zu der orthogonal zum Boden bzw. Aufstandsuntergrund der Bodenbearbeitungsmaschine verlaufenden Gierachse verläuft. Denn wenigstens in längs der Rollachse und längs der Gierachse ist der Maschinenrahmen durch die Fahrwerke (längs der Rollachse) bzw. durch den Maschinenrahmen bevorzugt mit den Fahrwerken verbindende Hubwerke (längs der Gierachse), insbesondere in Gestalt von Hubsäulen, jeweils isoliert bewegbar und somit einfach und genau steuerbar. Eingeschränkt gilt dies auch für eine isolierte Bewegung längs der Nickachse, etwa wenn die Fahrwerke um 90° aus der Gerade-aus-Stellung in eine Abrollrichtung parallel zur Nickachse lenkbar sind oder wenn die Bodenbearbeitungsmaschine gemäß der DE102016208246 A1 ausgebildet ist.

Eine besonders einfache Kopplung von Maschinenrahmen und Funktionsvorrichtung ermöglicht eine zur Gierachse der mobilen Bodenbearbeitungsmaschine parallele Schwenkachse, da die Gierachse in den meisten Betriebszuständen etwa parallel zur Schwerkraftwirkungsrichtung verläuft. Somit bewirkt die Schwerkraft bei einer gierachsenparallelen Schwenkachse kein oder nahezu kein zwischen den durch das Schwenkgelenk verbundenen Gelenkkörpern wirkendes Schwenkmoment.

Da die Funktionsvorrichtung, wie oben dargelegt ist, vorteilhafterweise eine große Masse und damit ein großes Gewicht aufweist, ist sie in der Regel nicht allein durch Muskelkraft bewegbar. Die Bodenbearbeitungsmaschine weist daher bevorzugt zur Schwenkverlagerung des vorrichtungszugeordneten Gelenkkörpers relativ zum rahmenzugeordneten Gelenkkörper um die Schwenkachse eine Aktuatorvorrichtung auf. Die Aktuatorvorrichtung kann beispielsweise ein elektrischer Stellmotor oder eine fluidbetriebene Kolben-Zylinder-Anordnung sein.

Grundsätzlich kann die Aktuatorvorrichtung in beliebiger Weise an der Bodenbearbeitungsmaschine vorgesehen sein. Dies schließt ein, dass die Kopplungsstruktur durch die Aktuatorvorrichtung verlaufen kann und somit die Aktuatorvorrichtung beim Entkoppeln von Maschinenrahmen und Funktionsvorrichtung in einen rahmenseitigen und in einen vorrichtungsseitigen Aktuatorvorrichtungsteil getrennt wird. Bevorzugt soll die Aktuatorvorrichtung jedoch durch die Kopplungsstruktur unbeeinflusst sein, um unnötigen Montage- und Demontageaufwand zu vermeiden. Daher sind bevorzugt sowohl ein rahmenzugeordneter Abstützort als auch ein vorrichtungszugeordneter Anlenkort der Aktuatorvorrichtung auf derselben Seite der Kopplungsstruktur angeordnet. Die Seiten der Kopplungsstruktur sind dabei entweder die Seite der Kopplungsformation oder die Seite der Gegenkopplungsformation. Bevorzugt liegen sowohl Anlenk- als auch Abstützort aufseiten der rahmenseitigen Kopplungsformation bzw. bezüglich der Kopplungsstruktur rahmenseitig, so dass beim Abkoppeln der Funktionsvorrichtung vom Maschinenrahmen die Aktuatorvorrichtung mit ihren zum Maschinenrahmen verlaufenden Energieversorgungs- oder/und Steuerleitungen verbunden bleiben kann.

Erfindungsgemäß ist die Kopplungsstruktur im vorrichtungszugeordneten Gelenckörper angeordnet, so dass das Schwenkgelenk auch bei entkoppelter Funktionsvorrichtung mit dem Maschinenrahmen verbunden bleibt.

Ganz grundsätzlich können die Kopplungsformation und die Gegenkopplungsformation je einen Flansch aufweisen, welche miteinander lösbar verbindbar sind, etwa durch eine Mehrzahl von Schrauben oder Schrauben-Mutter-Kombinationen. Um Gelenkfunktionen durch häufige Demontage und Montage eines Gelenks nicht unerwünscht schnell zu beeinträchtigen, ist bevorzugt weder die Kopplungsformation noch die Gegenkopplungsformation Teil oder Bauteil eines zusätzlich zu dem oben genannten Schwenkgelenk vorgesehenen weiteren Schwenkgelenks derart, dass die Kopplungsformation und die Gegenkopplungsformation im betriebsbereiten Zustand der Bodenbearbeitungsmaschine relativ zueinander schwenkbeweglich zur Ausführung einer bestimmungsgemäßen Relativschwenkbewegung um eine weitere Schwenkachse verbunden wären.

Sofern die Funktionsvorrichtung relativ zum Maschinenrahmen zusätzlich zum oben genannten Schwenkgelenk um ein weiteres Schwenkgelenk schwenkbar ist, ist die Kopplungsstruktur bevorzugt funktional zwischen dem Schwenkgelenk und dem weiteren Schwenkgelenk angeordnet, so dass das Schwenkgelenk nach einem Abkoppeln der Funktionsvorrichtung vom Maschinenrahmen mit dem Maschinenrahmen verbunden bleibt und dass das weitere Schwenkgelenk mit der Funktionsvorrichtung verbunden bleibt.

Erfindungsgemäß ist die Funktionsvorrichtung zusätzlich zur Schwenkbarkeit um die oben bevorzugt genannte gierachsenparallele Schwenkachse relativ zum Maschinenrahmen um eine zur Schwenkachse orthogonale Neigeachse als einer weiteren Schwenkachse im obigen Sinne neigbar sein.

Da die Bodenbearbeitungsmaschine erfindungsgemäß einen Neigeaktuator aufweist, um die Neigebewegung der Funktionsvorrichtung relativ zum Maschinenrahmen um die Neigeachse aktuatorisch bewirken zu können, ist es zur Vereinfachung und Reduzierung der für ein Koppeln bzw. Entkoppeln notwendigen Montage- und Demontagearbeit erfindungsgemäß vorgesehen, dass der Neigeaktuator vollständig vorrichtungsseitig angeordnet ist und auch im abgekoppelten Zustand mit der Funktionsvorrichtung verbunden bleibt. Der Neigeaktuator ist dann lediglich beim Anund Abkoppeln der Funktionsvorrichtung an die vom Maschinenrahmen zugeführte Energieversorgung anzuschließen bzw. von dieser zu trennen. Entsprechendes gilt für eine Signalverbindung zwischen einer rahmenseitigen Steuervorrichtung und dem Neigeaktuator. Auch diese ist beim An- und Abkoppeln herzustellen bzw. zu trennen.

Bevorzugt sind die Kopplungsformation und die Gegenkopplungsformation jedoch werkzeuglos miteinander koppelbar und voneinander lösbar. Dies kann unter Bildung einer besonders sicheren und dauerhaften Kopplungsverbindung von Maschinenrahmen und Funktionsvorrichtung dadurch erreicht werden, dass eine Formation aus Kopplungsformation und Gegenkopplungsformation eine erste Formschluss-Struktur, wie etwa Haken, Dorn, Kalotte und dergleichen, aufweist. Die jeweils andere Formation aus Kopplungsformation und Gegenkopplungsformation kann dann eine zweite Formschluss-Struktur, wie etwa Stange, Balken, Öse, Kugel und dergleichen, aufweisen. Somit kann zwischen der ersten und der zweiten Formschluss-Struktur ein gegen eine unerwünschte Trennung körperlich sichernder Formschluss hergestellt werden. Um zu vermeiden, dass ein Verschwenken der beiden Gelenkkörper relativ zueinander um die Schwenkachse eine unerwünschte Lösewirkung auf den zwischen der ersten und der zweiten Formschluss-Struktur hergestellten Formschlusseingriff hat, ist ein orthogonal zur Schwenkachse wirkender Formschlusseingriff bevorzugt.

Gemäß einer bevorzugten konstruktiven Ausgestaltung kann die erste Formschluss-Struktur einen Haken mit einem in Richtung der Schwenkachse offenen Hakenmaul aufweisen, sodass wiederum eine Schwenkbewegung der durch das Schwenkgelenk miteinander verbundenen Gelenkkörper möglichst wenig bzw. keinen lösenden Einfluss auf den zwischen der ersten und der zweiten Formschluss-Struktur hergestellten Formschlusseingriff haben kann. Im Falle einer bevorzugten gierachsenparallelen Schwenkachse öffnet das Hakenmaul dann, wenn es Teil der rahmenseitigen Kopplungsformation ist, bevorzugt entgegen der Schwerkraftwirkungsrichtung, sodass die Schwerkraft den Formschlusseingriff zwischen erster und zweiter Formschluss-Struktur zusätzlich unterstützt. Ist der Haken dagegen Teil der vorrichtungsseitigen Gegenkopplungsformation öffnet das Hakenmaul bei gierachsenparalleler Schwenkachse bevorzugt in Schwerkraftwirkungsrichtung, um die gleiche Unterstützungswirkung zu erzielen.

Als mit dem Haken formschlüssig wechselwirkendes Gegenteil kann die zweite Formschluss-Struktur einen quer zur Schwenkachse verlaufenden Stangenabschnitt aufweisen. Bevorzugt verläuft der Stangenabschnitt orthogonal zur Schwenkachse mit Abstand von dieser. Jedoch soll nicht ausgeschlossen sein, dass der Stangenabschnitt einen gekrümmten Verlauf aufweist oder von der strengen Orthogonalität abweicht. "Quer" zu einer Bezugsstruktur im Sinne der vorliegenden Anmeldung bedeutet dabei näher an der Orthogonalität als an der Parallelität zur Bezugsstruktur.

Zur Festlegung des Stangenabschnitts in einem möglichst großen Richtungsbereich kann der Stangenabschnitt im betriebsbereit gekoppelten Zustand von Maschinenrahmen und Funktionsvorrichtung vom Haken umgriffen sein. So kann der Haken den Stangenabschnitt um 180° umgreifen, sodass sich der Stangenabschnitt selbsttätig in das in umgreifende Hakenmaul hineinbewegen, insbesondere hineingleiten kann. Um ein unerwünschtes Herausgleiten des Stangenabschnitts aus dem Hakenmaul wenigstens zu erschweren, verläuft vorzugsweise die Bewegungsbahn, längs welcher der Stangenabschnitt sich in das Hakenmaul hineinbewegen kann, in einem Winkel angestellt zur Schwenkachse. Im bevorzugten Fall einer gierachsenparallel Schwenkachse ist die Bewegungsbahn des Stangenabschnitts bevorzugt um eine zur Schwenkachse orthogonale Neigeachse geneigt, etwa um 5° bis 25°. Zusätzlich oder alternativ kann die Bewegungsbahn eine gekrümmte Bewegungsbahn sein, deren dem Hakenmaul näherliegendes Ende gegenüber der Schwenkachse geneigt ist, bevorzugt in der oben angegebenen Art und Weise geneigt ist. Zur Feststellung des Neigungswinkels zwischen einer gekrümmten Bewegungsbahn und der Schwenkachse kann für den hinsichtlich des Neigungswinkels interessierenden Punkt der Bewegungsbahn die Tangente an die Bewegungsbahn in diesem Punkt herangezogen werden.

Dabei kann der Haken bereits eine gewisse Führungsfunktion zur Führung des Stangenabschnitts und der den Stangenabschnitt aufweisenden Baugruppe erfüllen, wenn der Haken eine quer zur Schwenkachse verlaufende konkave Maulinnenfläche aufweist, an welcher eine konvexe Außenfläche des Stangenabschnitts bei hergestelltem Formschlusseingriff zwischen erster und zweiter Formschluss-Struktur flächig anliegt. So kann eine Führungsfläche erzielt werden, welche sich quer, insbesondere orthogonal, zur Schwenkachse erstreckt. Eine solche Führungsfläche kann ein relatives Verkippen von Haken und Stangenabschnitt und somit von Maschinenrahmen und Funktionsvorrichtung um eine Kippachse verhindern oder zumindest einschränken, welche sowohl zur Schwenkachse als auch zu der bezüglich der Schwenkachse queren Verlaufsrichtung des Anlagebereichs von Maulinnenfläche und Stangenabschnitts-Außenfläche orthogonal ist.

Für eine definierte Lageorientierung, insbesondere wiederum werkzeuglose Lageorientierung, von Maschinenrahmen und Funktionsvorrichtung relativ zueinander kann eine Formation aus Kopplungsformation und Gegenkopplungsformation eine Anlage-Struktur mit einer, vorzugsweise freiliegenden, Anlagefläche aufweisen. Weiterhin kann die jeweils andere Formation aus Kopplungsformation und Gegenkopplungsformation eine Kontakt-Struktur mit einer, vorzugsweise freiliegenden, Kontaktfläche aufweisen. Dabei stehen die Anlage-Struktur und die Kontakt-Struktur im betriebsbereit gekoppelten Zustand von Maschinenrahmen und Funktionsvorrichtung in einem in wenigstens einer quer zur Schwenkachse verlaufenden Richtung wirkenden Anlageeingriff miteinander. In diesem Anlageeingriff berühren die Anlagefläche und die Kontaktfläche einander. Daher haben die Normalenvektoren der Anlagefläche und der Kontaktfläche in einem Koordinatensystem mit zur Schwenkachse paralleler axialer Koordinate und mit zur Schwenkachse orthogonaler radialer Koordinate bevorzugt eine größere radiale als axiale Komponente, besonders bevorzugt sind die Normalenvektoren von Anlagefläche und Kontaktfläche ausschließlich orthogonal zur Schwenkachse orientiert.

Die Anlagefläche kann eine vorteilhafte Ausrichtwirkung zur relativen Ausrichtung von Maschinenrahmen und Funktionsvorrichtung bzw. von Kopplungsformation und Gegenkopplungsformation entfalten, wenn die Anlagefläche wenigstens zwei Anlageflächenabschnitte unterschiedlicher Ausrichtung aufweist. Bevorzugt sind die wenigstens zwei Anlageflächenabschnitte mit einem Winkelabstand um die Schwenkachse angeordnet. Die unterschiedliche Ausrichtung ist vorzugsweise eine Ausrichtung in unterschiedlichen radialen Richtungen, welche miteinander einen Winkel um die Schwenkachse einschließen. Gleiches gilt für die mit der Anlagefläche für einen Anlageeingriff zusammenwirkende Kontaktfläche, welche aus den genannten Gründen wenigstens zwei Kontaktflächenabschnitte unterschiedlicher Ausrichtung aufweist, wobei die wenigstens zwei Kontaktflächenabschnitte mit einem Winkelabstand um die Schwenkachse angeordnet sind. Auch diese unterschiedliche Ausrichtung ist bevorzugt eine Ausrichtung in unterschiedlichen radialen Richtungen, die einen Winkel um die Schwenkachse miteinander einschließen. Um axiale Kraftwirkungen längs der Schwenkachse am Anlageeingriff zu vermeiden, sind besonders bevorzugt die unterschiedlichen Ausrichtungen nur in radialer Ausrichtung unterschiedlich. So können die einen Flächenabschnitte aus Anlageflächenabschnitten und Kontaktflächenabschnitten voneinander oder/und von der Schwenkachse wegweisen und können die jeweils anderen Flächenabschnitte aus Anlageflächenabschnitten und Kontaktflächenabschnitten aufeinander zu oder/und zu der Schwenkachse hinweisen.

Bevorzugt umfassen Kopplungsformation und Gegenkopplungsformation sowohl die oben genannte erste und zweite Formschluss-Struktur als auch die oben genannte Anlage-Struktur und Kontakt-Struktur, um durch Formschluss eine sichere Verbindung und durch Anlageeingriff eine gezielte relative Ausrichtung von Kopplungsformation und Gegenkopplungsformation zu erzielen. Für eine stabile Anordnung ohne unerwünschte Kraftrückwirkung ist es vorteilhaft, wenn im betriebsbereit gekoppelten Zustand von Maschinenrahmen und Funktionsvorrichtung bezüglich einer zur Schwenkachse orthogonalen Richtung beiderseits der ersten und der zweiten Formschluss-Struktur je wenigstens ein Anlageflächenabschnitt und ein diesen berührender Kontaktflächenabschnitt gelegen sind.

Grundsätzlich können die Kopplungsformation und die Gegenkopplungsformation ausreichen, um die Funktionsvorrichtung sicher und korrekt ausgerichtet mit dem Maschinenrahmen lösbar zu koppeln. Zur Erhöhung der Betriebssicherheit kann die Bodenbearbeitungsmaschine eine Verriegelungsvorrichtung aufweisen, welche veränderbar ist zwischen einem Verriegelungszustand, in welchem sie die mit dem Maschinenrahmen gekoppelte Funktionsvorrichtung gegen ein Lösen vom Maschinenrahmen sichert, und einem Freigabezustand, in welcher sie ein Lösen der Funktionsvorrichtung vom Maschinenrahmen gestattet.

Gemäß einer bevorzugten konstruktiven Ausgestaltung kann die Verriegelungsvorrichtung wenigstens ein verlagerbares Verriegelungsglied, wie Verriegelungshaken oder/und Verriegelungsbolzen, aufweisen, welches auf einer Seite der Kopplungsstruktur verlagerbar gelagert ist und welches abhängig von seiner Verlagerungsstellung - Im Falle einer mit dem Maschinenrahmen gekoppelten Funktionsvorrichtung - eine Sicherungsformation auf der jeweils anderen Seite der Kopplungsstruktur hintergreift oder/und durchsetzt.

Beispielsweise kann die Sicherungsformation der oben genannte Stangenabschnitt sein und kann das Verriegelungsglied ein das oben genannte Hakenmaul je nach seiner Betriebsstellung verschließendes und freigebendes Verschlussbauteil am Haken sein. Zusätzlich oder alternativ kann die Sicherungsformation eine Öse oder ein Sackloch oder eine Durchgangsöffnung sein, in welche das Verriegelungsglied, beispielsweise als verlagerbarer Bolzen, eingeschoben, insbesondere durchsetzend eingeschoben, oder aus welcher das Verriegelungsglied zurückgezogen ist, je nach Betriebsstellung des Verriegelungsglieds.

Das wenigstens eine Verriegelungsglied ist bevorzugt ein verlagerbarer Bolzen, wie er aus der DE 10 2016 014 585 A1 bekannt ist.

Unabhängig von der konstruktiven Ausgestaltung von Kopplungsformation und Gegenkopplungsformation kann die mit dem Maschinenrahmen gekoppelte Funktionsvorrichtung dann sicher mit hoher Verriegelungskraft am Maschinenrahmen verriegelt werden, wenn der das Verriegelungsglied tragende Gelenkkörper auf derselben Seite der Kopplungsstruktur, auf welcher das Verriegelungsglied verlagerbar gelagert ist, eine Führungsformation trägt, wobei das Verriegelungsglied dann, wenn es die Sicherungsformation auf der anderen Seite der Kopplungsstruktur am selben Gelenkkörper hintergreift oder/und durchsetzt, auch die Führungsformation hintergreift oder/und durchsetzt. Die Führungsformation kann als Öse oder Durchgangsöffnung ausgebildet sein.

Gemäß einer bevorzugten Weiterbildung ist das Verriegelungsglied wenigstens auch, vorzugsweise nur, längs der Schwenkachse verlagerbar, so dass eine Schwenkbewegung zwischen Maschinenrahmen und Funktionsvorrichtung eine vom Verriegelungsglied hergestellte Verriegelung möglichst wenig oder nicht lösend beeinflusst.

Zusätzlich zur körperlich-mechanischen Kopplung von Maschinenrahmen und Funktionsvorrichtung können Maschinenrahmen und Funktionsvorrichtung zur Übertragung von Energie oder/und Signalen gekoppelt sein. Beispielsweise kann der Antrieb der Transportvorrichtung oder/und der oben genannte Neigeaktuator eine Energieversorgung benötigen. Ebenso kann die Transportvorrichtung oder/und insbesondere der Neigeaktuator jeweils einen oder mehrere Sensoren aufweisen, deren Erfassungssignale zu einer rahmenseitigen Steuervorrichtung übertragen werden müssen. Schließlich müssen auch Signale zu der Transportvorrichtung oder/und zum Neigeaktuator übertragbar sein, um deren Betrieb vom Maschinenrahmen aus, etwa von einem Fahrstand aus steuern zu können. Der Betrieb der Funktionsvorrichtung, insbesondere als Transportvorrichtung, kann durch eine elektronische Kamera bilderfassend oder mit geeigneten Betriebssensoren sonst wie überwacht werden. Auch hierfür wird vorrichtungsseitig eine Energie- oder/und Signalübertragung benötigt. Um auch eine solche Kopplung möglichst werkzeugfrei herstellen und lösen zu können, kann zwischen der Funktionsvorrichtung und dem Maschinenrahmen wenigstens eine elektrische Steckverbindung oder/und wenigstens eine fluidische, etwa pneumatische oder/und hydraulische Schnellkupplung angeordnet sein.

Die vorliegende Erfindung wird nachfolgend anhand der beiliegenden Figuren erläutert werden. Es stellt dar:
- Fig. 1: eine grobschematische Darstellung einer erfindungsgemäßen Ausführungsform einer Bodenbearbeitungsmaschine während eines Bodenbearbeitungsbetriebs,
- Fig. 2: eine vergrößerte Detailansicht einer Baugruppe aus rahmenzugeordnetem Gelenkkörper und einem mit diesem durch ein Schwenkgelenk verbundenen rahmenseitigen Abschnitt eines vorrichtungszugeordneten Gelenckörpers, wobei die Kopplungsformation am rahmenseitigen Abschnitt des vorrichtungszugeordneten Gelenkkörpers ausgebildet ist,
- Fig. 3: die Baugruppe von Figur 2 aus anderer Perspektive,
- Fig. 4: die Baugruppe von den Figuren 2 und 3 aus wiederum anderer Perspektive,
- Fig. 5: die Baugruppe aus den Figuren 2 bis 4 und der die Gegenkopplungsformation tragende vorrichtungsseitige Abschnitt des vorrichtungszugeordneten Gelenkkörpers zu Beginn eines Kopplungsvorgangs in Ansicht von der Seite,
- Fig. 6: die Baugruppe von Figur 5 und der die Gegenkopplungsformation tragende vorrichtungsseitige Abschnitt des vorrichtungszugeordneten Gelenkkörpers nach weiterer Annäherung,
- Fig. 7: die Baugruppe von Figuren 5 und 6 und der die Gegenkopplungsformation tragende vorrichtungsseitige Abschnitt des vorrichtungszugeordneten Gelenkkörpers nach Herstellung nur eines Formschlusseingriffs zwischen den beteiligten Formschluss-Strukturen von Kopplungsformation und Gegenkopplungsformation,
- Fig. 8: die Baugruppe von Figuren 5 bis 7 und der die Gegenkopplungsformation tragende vorrichtungsseitige Abschnitt des vorrichtungszugeordneten Gelenkkörpers nach Herstellung sowohl eines Formschlusseingriffs zwischen den beteiligten Formschluss-Strukturen als auch eines Anlageeingriffs zwischen den beteiligten Anlage- und Kontakt-Strukturen von Kopplungsformation und Gegenkopplungsformation, und
- Fig.9: eine grobschematische perspektivische Ansicht einer Tragevorrichtung als einer weiteren bzw. alternativen mit dem Maschinenrahmen koppelbaren Funktionsvorrichtung.

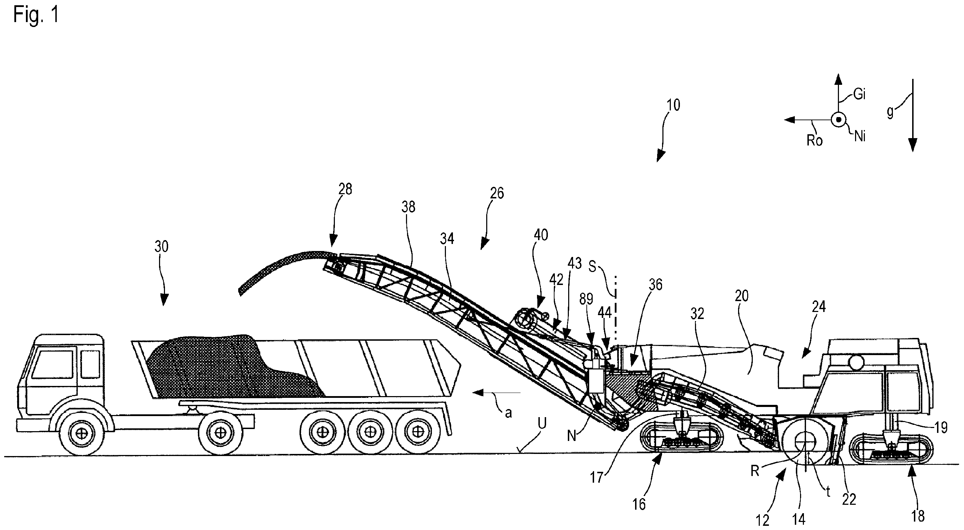

In Figur 1 ist eine erfindungsgemäße Bodenbearbeitungsmaschine (nachfolgend kurz als "Maschine" bezeichnet) allgemein mit 10 bezeichnet. Beispielhaft ist als erfindungsgemäße Maschine 10 eine Straßengroßfräse dargestellt, deren Arbeitsvorrichtung 12 mit einer an sich bekannten Fräswalze 14, wie für Straßengroßfräsen typisch, zwischen den vorderen Fahrwerken 16 und den hinteren Fahrwerken 18 angeordnet ist. Die jeweils vorzugsweise durch einen nicht dargestellten Hydromotor zur Vortriebsbewegung antreibbaren Fahrwerke 16 und 18 sind lenkbar und tragen einen Maschinenrahmen 20, welcher wiederum die Arbeitsvorrichtung 12 trägt. Die Maschine 10 ist somit ein selbstfahrendes Fahrzeug.

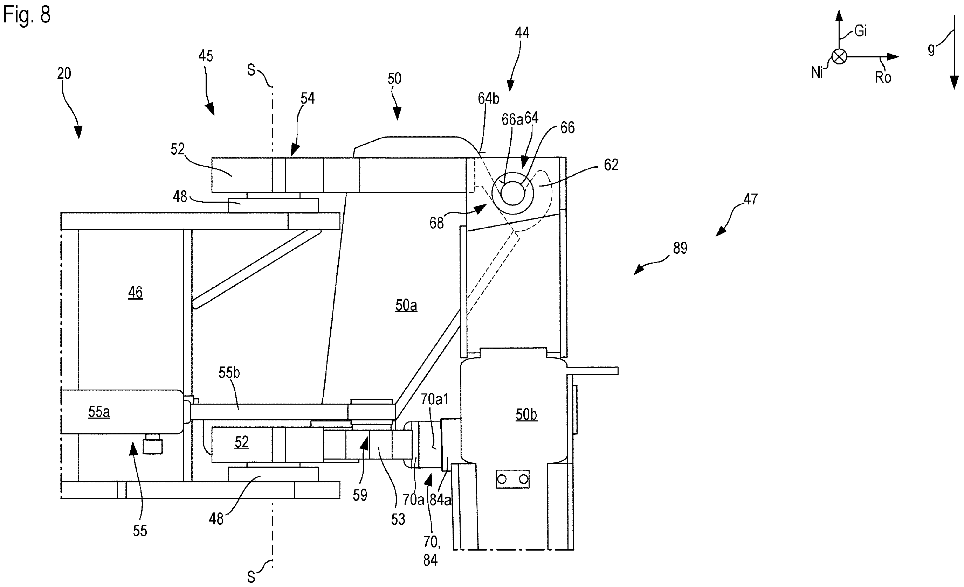

Die Schwerkraftwirkungsrichtung ist in den Figuren 1 bis 3 und 5 bis 8 mit einem Pfeil g gekennzeichnet.

Die um eine zur Zeichenebene von Figur 1 orthogonale, parallel zur Nickachse Ni der Maschine 10 verlaufende Rotationsachse R rotierbare Fräswalze 14 ist durch einen Fräswalzenkasten 22, welcher die Fräswalze 14 um die Rotationsachse R rotierbar lagert, zur Außenumgebung der Maschine 10 abgeschirmt. Der Fräswalzenkasten 22 ist zum Boden bzw. Untergrund U, auf welchem die Maschine 10 mit den Fahrwerken 16 und 18 aufsteht, und welchen die Fräswalze 14 im Bearbeitungsbetrieb abträgt, hin offen, um die bestimmungsgemäße Bodenbearbeitung der Maschine 10 zu ermöglichen.

Der Maschinenrahmen 20 ist längs der Gierachse Gi höhenverstellbar über vordere Hubsäulen 17 und hintere Hubsäulen 19 mit den Fahrwerken 16 und 18 verbunden, wodurch beispielsweise die Frästiefe t der Fräswalze 14 einstellbar ist.

Die Maschine 10 ist von einem Fahrstand 24 aus steuerbar. Der Fahrstand 24 kann in an sich bekannter Weise überdacht sein.

Von der Fräswalze 14 während der bestimmungsgemäßen Bodenbearbeitung vom Boden U abgetragenes Bodenmaterial wird von einer Transportvorrichtung 26 von der Arbeitsvorrichtung 12 zu einem Abgabeort 28 gefördert, wo es im dargestellten Beispiel einem die Maschine 10 während der Bodenbearbeitung mit Abstand in Richtung der Rollachse Ro vorausfahrend-begleitenden Transport-Lkw 30 übergeben wird. Die Bodenbearbeitungsmaschine 10, und im dargestellten Beispiel auch der Transport-Lkw 30, bewegen sich während einer Bodenbearbeitung in einer durch den Pfeil a gekennzeichneten Arbeitsrichtung vorwärts.

Die Transportvorrichtung 26 umfasst ein näher bei der Arbeitsvorrichtung 12 gelegenes Aufnahmeband 32 und ein mit dem Aufnahmeband 32 kooperierendes, weiter von der Arbeitsvorrichtung 12 entfernt gelegenes Abwurfband 34. Das Aufnahmeband 32 ist umlauffähig, aber hinsichtlich seiner relativen Orientierung zum Maschinenrahmen 20 unveränderlich am Maschinenrahmen 20 gelagert. An einer Übergabestelle 36 übergibt das Aufnahmeband 32 das von ihm geförderte Material an das Abwurfband 34, welches das übernommene Material bis zum Abgabeort 28 fördert. Das Abwurfband 34 ist ebenfalls umlauffähig, jedoch relativ zum Maschinenrahmen 20 um eine gierachsenparallele Schwenkachse S schwenkbar und bevorzugt um eine zur Schwenkachse S orthogonale Neigeachse N neigbar, sodass der Abgabeort 28, welcher mit dem abwerfenden Längsende des Abwurfbands 34 zusammenfällt, in etwa auf der Oberfläche einer Kugel- oder Ellipsoidkalotte beweglich ist, um den Abgabeort 28 an das jeweilige Begleitfahrzeug anzupassen. Ein Neigeaktuator 43 in bevorzugter Gestalt wenigstens einer fluidbetriebenen, vorzugsweise hydraulisch betriebenen Kolben-Zylinder-Anordnung gestattet eine Veränderung des Neigungswinkels des Abwurfbandes 34 vom Fahrstand 24 aus.

Die Transportvorrichtung 26 ist im dargestellten Beispiel, jedoch nicht notwendigerweise grundsätzlich, längs ihrer gesamten Länge durch eine Einhausung 38 eingehaust, um eine Belastung der Außenumgebung der Transportvorrichtung 26 durch Staub und durch von der Transportvorrichtung 26 möglicherweise herabfallendes Material zu vermeiden. Der über dem Aufnahmeband 32 gelegene Teil der Einhausung 38 ist größtenteils durch den Maschinenrahmen 20 realisiert.

Zur weiteren Verringerung der Schmutzemission, insbesondere Staubemission, der Maschine 10 durch die Arbeitsvorrichtung 12 umfasst diese eine Absaugeinrichtung 40 mit einer Filtervorrichtung 42.

An einer Kopplungsstruktur 44 ist das Abwurfband 34 als Funktionsvorrichtung vom Maschinenrahmen 20 abkoppelbar, um das Gewicht der Maschine 10 und mit dem Gewicht auch deren Abmessungen für einen Transport der Maschine 10 verringern zu können.

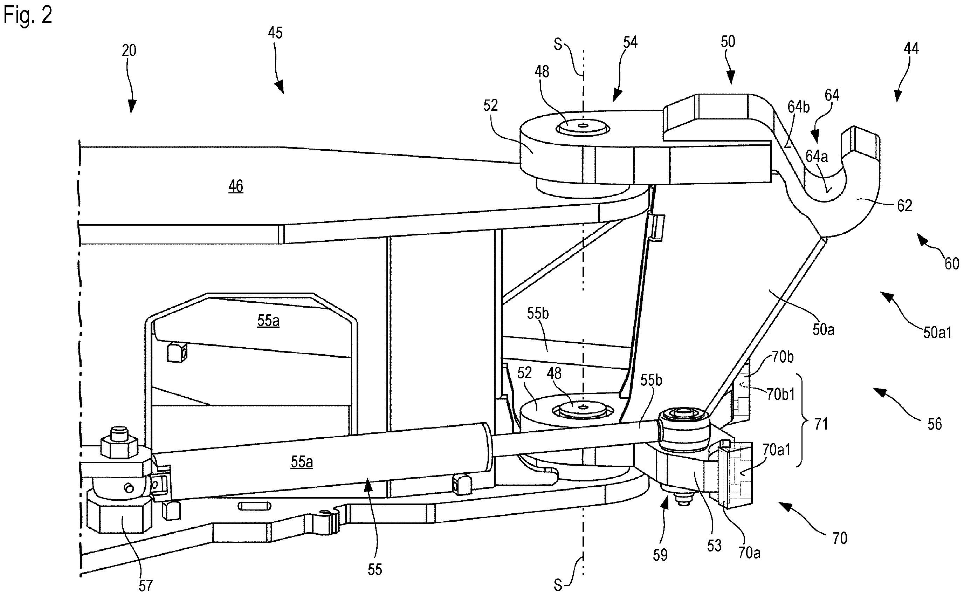

Eine bezüglich der Kopplungsstruktur 44 rahmenseitige Baugruppe 45 wird nachfolgend anhand der Figuren 2 bis 4 näher erläutert.

Ein auskragender Gelenkkörper 46 des Maschinenrahmens 20 trägt als rahmenzugeordneter Gelenkkörper 46 zwei im dargestellten Beispiel baugleiche kollineare Lagerzapfen 48, welche die Schwenkachse S definieren, um die das Abwurfband 34 relativ zum Maschinenrahmen 20 schwenkbar ist. Der rahmenzugeordnete Gelenckörper 46 kann einstückig mit dem übrigen Maschinenrahmen 20 ausgebildet, mit diesem stoffschlüssig verbunden oder mit diesem durch gesonderte Verbindungsmittel, wie beispielsweise Schrauben und Muttern, verbunden sein.

An den Lagerzapfen 48 ist ein rahmenseitiger Abschnitt 50a eines vorrichtungszugeordneten Gelenkkörpers 50 dauerhaft schwenkbar gelagert. Die Lagerzapfen 48 und diese umgreifende Lagerbuchsen 52, welche im dargestellten Beispiel vorteilhaft einstückig mit dem rahmenseitigen Abschnitt 50a des vorrichtungszugeordneten Gelenkkörpers 50 ausgebildet sind, bilden ein Schwenkgelenk 54. Das Schwenkgelenk 54 besteht dauerhaft, unabhängig vom Kopplungszustand des Maschinenrahmen 20 und des Abwurfbands 34 als der koppelbaren Funktionsvorrichtung.

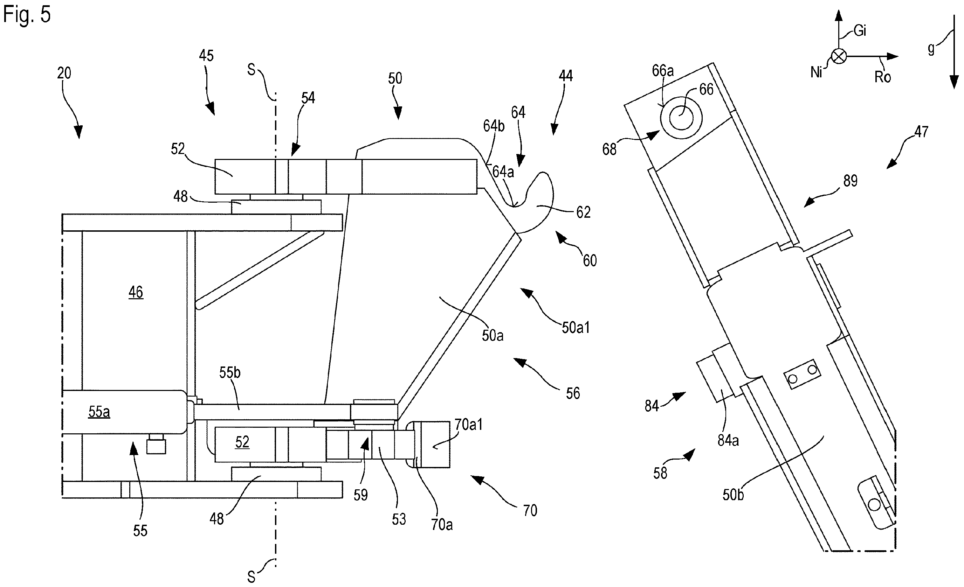

An die in Figur 2 dargestellte, bezüglich der Kopplungsstruktur 44 rahmenseitige Baugruppe 45 ist eine in den Figuren 2 bis 4 nicht dargestellte und in den Figuren 5 bis 8 teilweise dargestellte vorrichtungsseitige Baugruppe 47, umfassend einen vorrichtungsseitigen Abschnitt 50b des vorrichtungszugeordneten Gelenkkörpers 50 und das damit verbundene Abwurfband 34, ankoppelbar und von dieser abkoppelbar.

Die Schwenkachse S und das Schwenkgelenk 54 übergreifend, umfasst die Maschine 10 eine Aktuatorvorrichtung 55, welche im dargestellten Beispiel als hydraulisch oder pneumatisch betätigbare Kolben-Zylinder-Vorrichtung ausgebildet ist. Bevorzugt umfasst die Aktuatorvorrichtung 55 zur Ausübung möglichst symmetrischer Schwenkmomente in beiden entgegengesetzten Schenksinnen zwei Kolben-Zylinder-Vorrichtungen, die bei gestreckter Stellung von rahmenzugeordnetem Gelenckörper 46 und vorrichtungszugeordnetem Gelenkkörper 50 bevorzugt spiegelsymmetrisch bezüglich einer durch die Gierachse Gi und die Rollachse Ro aufgespannten Symmetrieebene angeordnet sind. Die Aktuatorvorrichtung 55 aufseiten des Maschinenrahmens 20 ist an einem rahmenzugeordneten Abstützort 57 abgestützt und ist aufseiten der Funktionsvorrichtung 34 an einem bezüglich der Schwenkachse S vorrichtungszugeordneten Anlenkort 59 angelenkt. Im dargestellten Beispiel ist der Zylinder 55a der Aktuatorvorrichtung 55 am Abstützort 57 abgestützt und ist die Kolbenstange 55b am Anlenkort 59 angelenkt. Die Aktuatorvorrichtung 55 kann auch umgekehrt eingebaut sein, jedoch ist eine rahmennähere Anordnung des mit Fluid zu versorgenden Zylinders 55a wegen der in der Regel vom Maschinenrahmen 20 aus erfolgenden Fluidversorgung bevorzugt.

Die gesamte Aktuatorvorrichtung ist rahmenseitig angeordnet und bleibt folglich von einem An- bzw. Abkoppelvorgang zwischen Maschinenrahmen 20 und Funktionsvorrichtung 34 unbeeinflusst.

An dem von der Schwenkachse S entfernt gelegenen Endbereich 50a1 des rahmenseitigen Abschnitts 50a des vorrichtungszugeordneten Gelenkkörpers 50 ist eine rahmenseitige Kopplungsformation 56 angeordnet, an welche eine in den Figuren 2 bis 4 nicht dargestellte und in den Figuren 5 bis 8 dargestellte Gegenkopplungsformation 58 des vorrichtungsseitigen Abschnitts 50b des vorrichtungszugeordneten Gelenkkörpers 50 lösbar, und bevorzugt werkzeuglos, ankoppelbar und von welcher die Gegenkopplungsformation 58, ebenso bevorzugt werkzeuglos, abkoppelbar ist.

Die Kopplungsformation 56 weist als erste Formschluss-Struktur 60 einen Haken 62 auf, mit einem längs der Schwenkachse S und entgegen der Schwerkraftwirkungsrichtung g öffnenden Hakenmaul 64. Der Haken 62 weist im dargestellten Ausführungsbeispiel eine teilzylindrisch-konkave Maulinnenfläche 64a auf, welche sich im Wesentlichen orthogonal zur Schwenkachse S erstreckt, d. h. die Zylinderachse der teilzylindrische-konkave Maulinnenfläche 64a verläuft orthogonal zur Schwenkachse S. Damit kann die Maulinnenfläche 64a eine im dargestellten Beispiel zylindrisch-konvexe Stangenaußenfläche 66a eines Stangenabschnitts 66 (siehe Figuren 5 bis 8) als eine zweite Formschluss-Struktur 68 der Gegenkopplungsformation 58 bei hergestelltem Formschlusseingriff um bis zu 180° umgreifen. Die Stangenaußenfläche 66a und die Maulinnenfläche 64a liegen bei hergestelltem Formschlusseingriff flächig aneinander an, sodass die Breite des Hakens 62 eine Führungslänge definiert, längs welcher der Stangenabschnitt 66 lagedefiniert gehalten ist.

Auf der näher beim Maschinenrahmen 20 gelegenen Seite des Hakens 62 ist eine Einführfläche 64b ausgebildet, an welcher anliegend der Stangenabschnitt 66 in das Hakenmaul 64 hineingleiten kann. Die Einführfläche 64b ist relativ zur Schwenkachse S bevorzugt um eine zur Schwenkachse S orthogonale Neigeachse geneigt, sodass eine Schwenkbewegung des vorrichtungszugeordneten Gelenkkörpers 50 relativ zum rahmenzugeordneten Gelenkkörper 46 möglichst keine Lösewirkung auf den zwischen Stangenabschnitt 66 und Haken 62 hergestelltem Formschlusseingriff hat.

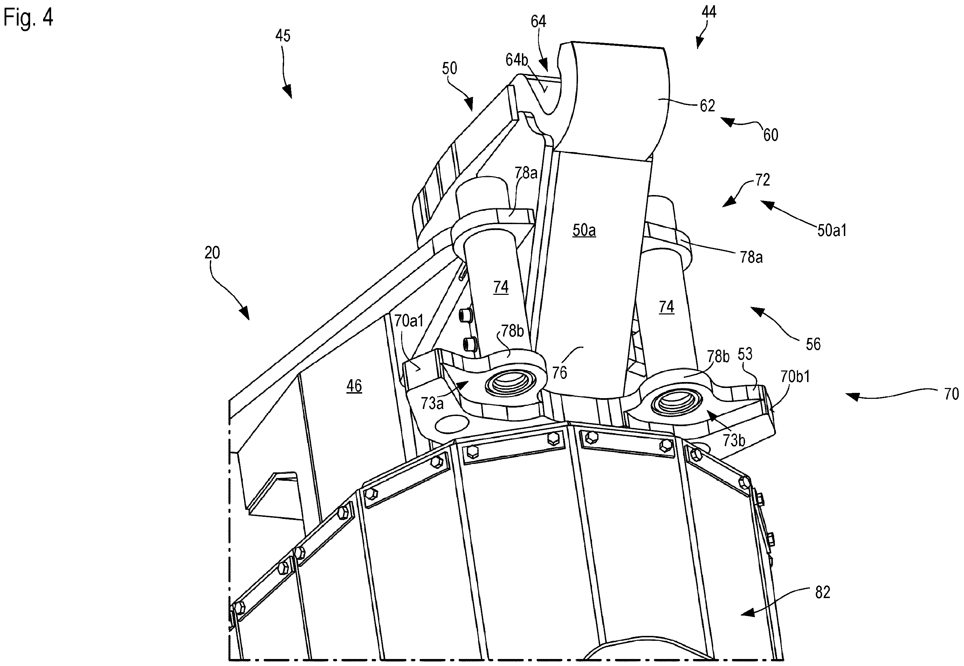

Die Kopplungsformation 66 weist außerdem eine Anlage-Struktur 70 auf mit einem ersten Anlagekörper 70a und mit einem gesondert davon ausgebildeten zweiten Anlagekörper 70b. Die beiden Anlagekörper 70a und 70b sind auf unterschiedlichen Seiten des Hakens 62 und in Richtung der Gierachse Gi mit Abstand von diesem angeordnet. Jeder der Anlagekörper 70a und 70b weist einen Anlageflächenabschnitt 70a1 bzw. 70b1 auf, wobei in Figur 2 lediglich die Anlagefläche 70a1 des Anlagekörpers 70a zu erkennen ist. Die Anlageflächenabschnitte 70a1 des Anlagekörpers 70a sowie 70b1 (siehe Figur 4) des Anlagekörpers 70b, welche gemeinsam eine Anlagefläche 71 bilden, sind im dargestellten Beispiel bevorzugt parallel zur Schwenkachse S ausgerichtet und weisen bei gestreckter Bezugsstellung von rahmenzugeordnetem Gelenkkörper 46 und rahmenseitigem Abschnitt 50a des vorrichtungszugeordneten Gelenkkörpers 50 sowohl längs der Rollachse Ro vom Maschinenrahmen 20 weg als auch parallel zur Nickachse Ni voneinander weg. Die Anlageflächenabschnitte 70a1 und 70b1 sind in der genannten Bezugsstellung bezüglich der oben genannten durch die Rollachse Ro und die Gierachse Gi aufgespannten Spiegelsymmetrieebene spiegelsymmetrisch angeordnet.

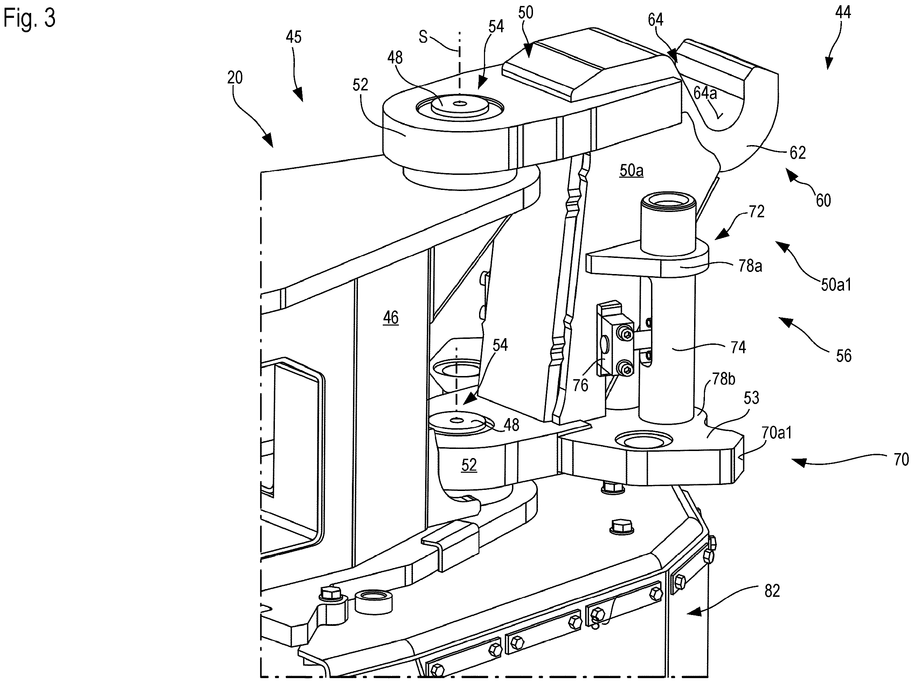

In Figur 3 ist die Aktuatorvorrichtung 55 aus Gründen besserer Übersichtlichkeit weggelassen. Dafür ist eine Verriegelungsvorrichtung 72 gezeigt, welche zwei vorzugsweise längs der Schwenkachse S verlagerbare Verriegelungsbolzen 74 umfasst, die durch eine Halterung 76 am rahmenseitigen Abschnitt 50a des vorrichtungszugeordneten Gelenkkörpers 50 festgelegt sind.

Abweichend von der Darstellung von Figur 2 können die Anlageflächenabschnitte 70a1 und 70b1 nicht nur an gesonderten Anlagekörper 70a und 70b ausgebildet sein, die an eine Plattenstruktur 53 anmontiert sind, an welcher auch der Anlenkort 59 realisiert ist, sondern können die Anlageflächenabschnitte 70a1 und 70b1 auch einstückig mit der Plattenstruktur 53 des rahmenseitigen Abschnitts 50a des vorrichtungszugeordneten Gelenkkörpers 50 ausgebildet sein.

Der Verriegelungsbolzen 74 ist in jeder seiner Betriebsstellungen, also unabhängig von seinem Verlagerungszustand, durch eine obere Führungsformation 78a und durch eine längs der Gierachse Gi mit Abstand von der oberen Führungsformation 78a angeordnete untere Führungsformation 78b geführt. Beide Führungsformationen 78a und 78b sind als Ösen oder Durchgangsöffnungen ausgebildet, welche den im Wesentlichen zylindrischen Verriegelungsbolzen 74 längs seines gesamten Umfangs mit Spielpassung oder mit größerem Spaltmaß als Spielpassung umgreifen. Der Verriegelungsbolzen 74 ist in Figur 3 in seiner Freigabestellung gezeigt, in welcher die Verriegelungsvorrichtung 72 ein Ankoppeln und ein Abkoppeln der Funktionsvorrichtung 34 an den Maschinenrahmen 20 bzw. vom Maschinenrahmen 20 gestattet.

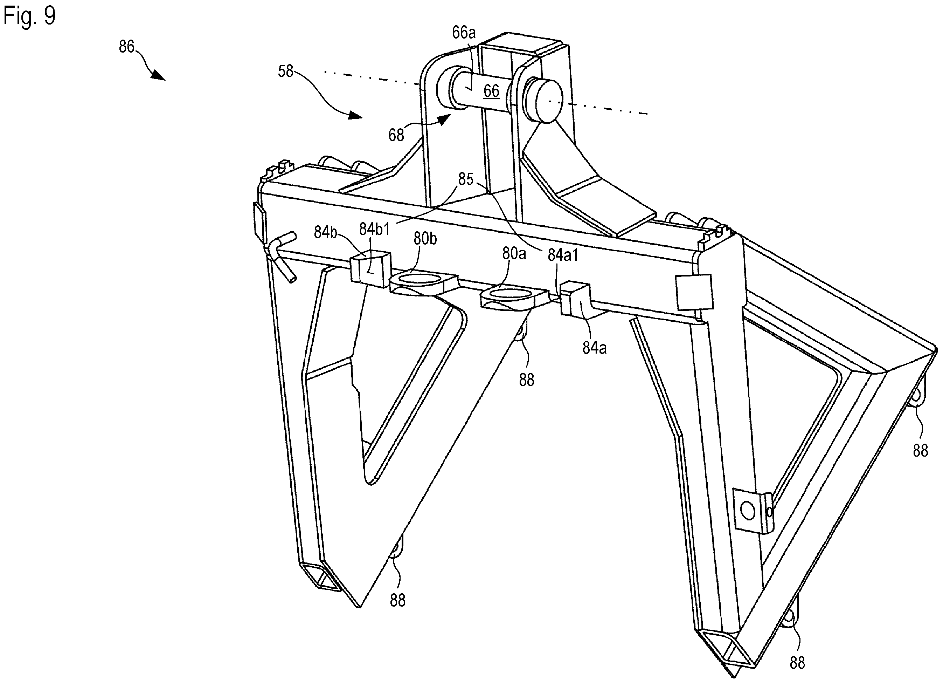

In Figur vier ist auf der Unterseite der Plattenstruktur 73 jedem Verriegelungsbolzen 74 zugeordnet eine Ausnehmung 73a bzw. 73b erkennbar, in welchen Sicherungsformationen 80a und 80b (siehe Figur 9) im betriebsbereiten Zustand der Maschine 10 derart angeordnet sind, dass die als Ösen oder Durchgangsöffnungen ausgebildeten vorrichtungsseitigen Sicherungsformationen 80a und 80b mit den rahmenseitigen Führungsformationen 78a und 78b längs einer Parallelen zur Schwenkachse S fluchten. In dieser fluchtenden Anordnung kann jeder Verriegelungsbolzen 74 der Verriegelungsvorrichtung 72 ausgehend von der in den Figuren 3 und 4 gezeigten Freigabestellung in seine Verriegelungsstellung abgesenkt werden, in welcher er sowohl die rahmenseitigen Führungsformationen 78a und 78b als auch die ihm jeweils zugeordnete vorrichtungsseitige Sicherungsformation 80a oder 80b durchsetzt und so ein Schwenken der Gegenkopplungsformation 58 relativ zur Kopplungsformation 56 um den im Hakenmaul 64 aufgenommenen Stangenabschnitt 66 verhindert.

In den Figuren 3 und 4 ist die schürzenartige Verkleidung 82 an der Übergabestelle 36 vom Aufnahmeband 32 auf das Abwurfband 34 dargestellt.

In den Figuren 5 bis 8 ist ein Ankopplungsvorgang gezeigt, bei welchem der vorrichtungsseitige Abschnitt 50b des vorrichtungszugeordneten Gelenkkörpers 50 mit seiner Gegenkopplungsformation 58 an die Kopplungsformation 56 des rahmenseitigen Abschnitts 50a desselben vorrichtungszugeordneten Gelenkkörpers 50 angekoppelt wird.

In der Seitenansicht der Figuren 5 bis 8 ist eine Kontakt-Struktur 84 mit Kontaktkörpern 84a und 84b dargestellt, wobei der Kontaktkörper 84a den von ihm in Richtung der Nickachse Ni mit Abstand angeordneten Kontaktkörper 84b verdeckt. Beide Kontaktkörper 84a und 84b sind jedoch in Figur 9 zu erkennen. Die Kontaktkörper 84a und 84b weisen jeweils einen Kontaktflächenabschnitt 84a1 und 84b1 auf, welche eine Kontaktfläche 85 bilden und welche zum Anlageeingriff mit den Anlageflächenabschnitten 70a1 und 70b1 ausgebildet sind. Im betriebsbereiten Zustand der Maschine 10 verlaufen auch die Kontaktflächenabschnitte 84a1 und 84b1 parallel zur Schwenkachse S und sind längs der Rollachse Ro zum Maschinenrahmen 20 hin und parallel zur Nickachse Ni aufeinander zu gerichtet.

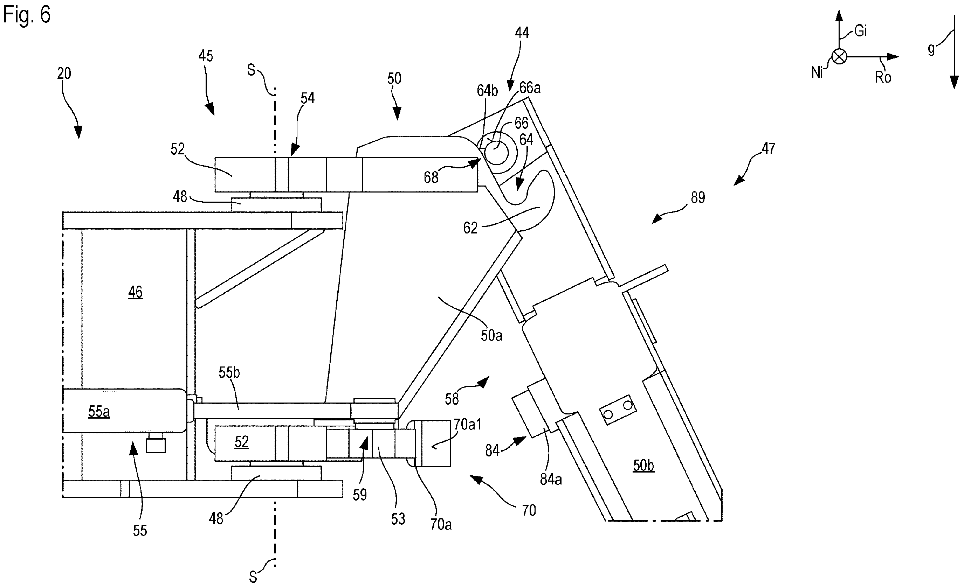

Ausgehend von dem in Figur 5 gezeigten vollständig entkoppelten Zustand wird der Maschinenrahmen 20 durch die Fahrwerke 16 und 18 auf die gegen Kopplungsvorrichtung 58 des gelegten Abwurfbandes 34 zu bewegt, bis die Außenfläche 66a des Stangenabschnitts 66 an der Einführfläche 64b anliegt (siehe Figur 6).

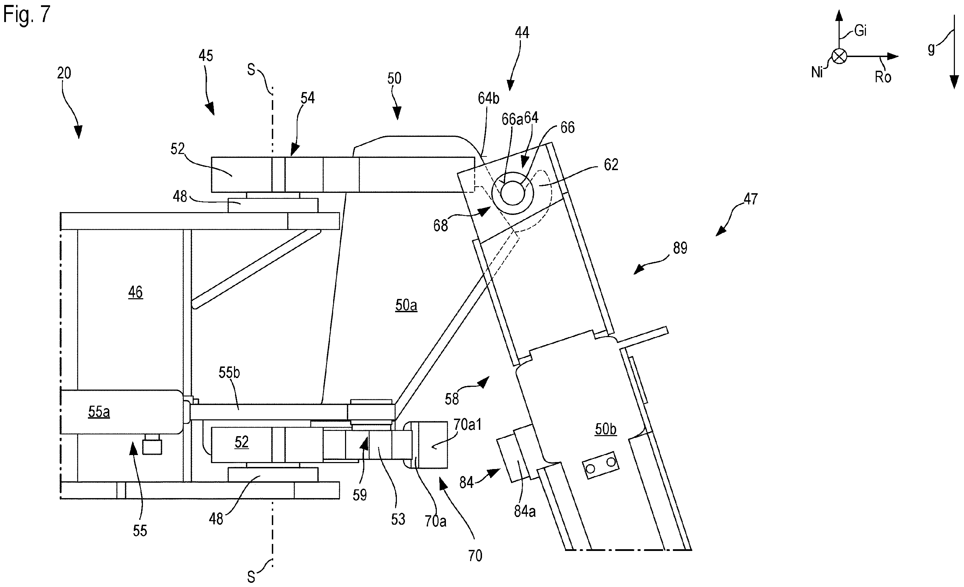

Anschließend wird der Maschinenrahmen 20 relativ zum abgelegten Abwurfband 34 und damit relativ zur Gegenkopplungsformation 58 durch die Hubsäulen 17 alleine oder 17 und 19 angehoben, sodass der Stangenabschnitt 66 entlang der Einführfläche 64b in Formschlusseingriff in das Hakenmaul 64 gleitet (siehe Figur 7).

Ausgehend von diesem erreichten Formschlusseingriff der Formschluss-Strukturen 60 und 68 wird der Haken 62 und mit ihm der Stangenabschnitt 66 und somit der starr mit dem Stangenabschnitt 66 verbundene vorrichtungsseitige Abschnitt 50b des vorrichtungszugeordneten Gelenkkörpers 50 weiter angehoben. Gegebenenfalls wird der Maschinenrahmen 20 in der gezeigten gestreckten Bezugsstellung längs der Rollachse Ro vorwärts bewegt, bis unter Aufrechterhaltung des Formschlusseingriffs zwischen der ersten und der zweiten Formschluss-Struktur 60 bzw. 68 die Anlageflächenabschnitte 70a1 und 70b1 mit den ihnen zugeordneten Kontaktflächenabschnitten 84a1 bzw. 84b1 in Anlageeingriff gelangen und verbleiben. In diesem hergestellten Anlageeingriff fluchten die Sicherungsformationen 80a bzw. 80b mit den jeweils zugeordneten Führungsformationen 78a und 78b des jeweiligen Verriegelungsbolzens 74. Der Verriegelungsbolzen 74 kann dann von seiner Freigabestellung in die Verriegelungsstellung verlagert werden und sichert somit die Kopplung zwischen Kopplungsformation 56 und Gegenkopplungsformation 58 und damit zwischen Maschinenrahmen 20 und dem Abwurfband 34 als der Funktionsvorrichtung.

Für den gesamten Prozess des Ankoppelns - ebenso wie für den entgegengesetzt gerichteten Prozess des Abkoppelns - ist erkennbar keinerlei Werkzeug notwendig, sondern das Ankoppeln und Abkoppeln kann alleine durch Bordmittel der Bodenbearbeitungsmaschine 10, umfassend den Maschinenrahmen 20, die Funktionsvorrichtung 34 sowie die durch das Schwenkgelenk 54 miteinander schwenkbar verbundenen Gelenkkörper 46 und 50, erzielt werden.

In Figur 9 ist eine Tragevorrichtung 86 als mögliche weitere Funktionsvorrichtung dargestellt, die über ihre Gegenkopplungsformation 58 mit der Kopplungsformation 56 koppelbar ist. An Trageösen 88 der Tragevorrichtung 86 können Bauteile oder Baugruppen angehängt werden, die dann über den höhenverstellbaren Maschinenrahmen 20 angehoben und durch die Fahrwerke 16 und 18 bewegt werden können. Beispielsweise kann die Bodenbearbeitungsmaschine 10 ihre Fräswalze 14 über die Tragevorrichtung 86 zumindest über geringe Distanzen, etwa von einem Montageort bis zu einem Transportfahrzeug bewegen.

Die Gegenkopplungsformation 58 der Tragevorrichtung 86, umfassend den Stangenabschnitt 66, die Sicherungsformationen 80a und 80b sowie die Kontaktkörper 84a und 84b mit Kontaktflächen 84a1 und 84b1 sind identisch wie eine Gegenkopplungsformation 58 eines das Abwurfband 34 tragenden Gestells 89 als Teil der vorrichtungsseitigen Baugruppe 47 ausgebildet, sodass der Darstellung von Figur 9 nicht nur die Information über die Gestalt der Gegenkupplungsformation 58 für die Tragevorrichtung 86, sondern auch über die Gestalt der Gegenkopplungsformation 58 für das Abwurfband 34 zu entnehmen ist.

## Patentansprüche

1. Mobile Bodenbearbeitungsmaschine (10), wie etwa Straßenfräse, Recycler oder Surface-Miner, wobei die Bodenbearbeitungsmaschine (10) in einem für einen Bodenbearbeitungsbetrieb bereiten Bezugszustand umfasst:
- einen Maschinenrahmen (20),
- eine Mehrzahl von mit dem Maschinenrahmen (20) verbundenen Fahrwerken (16, 18) zur Bereitstellung einer bodengebundenen Mobilität der Bodenbearbeitungsmaschine (10),
- eine am Maschinenrahmen (20) gehalterte Arbeitsvorrichtung (12) zur Material abtragenden Bearbeitung eines Bereichs eines Bodens (U),
- eine relativ zum Maschinenrahmen (20) schwenkbeweglich mit dem Maschinenrahmen (20) verbundene, von der Arbeitsvorrichtung (12) verschiedene Funktionsvorrichtung (34, 86), und
- eine funktional zwischen dem Maschinenrahmen (20) und der Funktionsvorrichtung (34, 86) angeordnete Schwenkgelenkanordnung mit einem rahmenzugeordneten Gelenkkörper (46), welcher mit dem Maschinenrahmen (20) verbunden ist, und mit einem vorrichtungszugeordneten Gelenkkörper (50), welcher mittels eines Schwenkgelenks (54) um eine Schwenkachse (S) relativ zum rahmenzugeordneten Gelenkkörper (46) schwenkbar mit dem rahmenzugeordneten Gelenkkörper (46) verbunden ist und welcher mit der Funktionsvorrichtung (34, 86) verbunden ist,
wobei zwischen dem Maschinenrahmen (20) und der Funktionsvorrichtung (34, 86) eine mechanische Kopplungsstruktur (44) ausgebildet ist, mittels welcher die Funktionsvorrichtung (34, 86) bestimmungsgemäß körperlich lösbar mit dem Maschinenrahmen (20) gekoppelt ist, wobei die Kopplungsstruktur (44) eine rahmenseitige Kopplungsformation (56) aufweist, welche mit dem Maschinenrahmen (20) verbunden ist, und eine vorrichtungsseitige Gegenkopplungsformation (58) aufweist, welche mit der Funktionsvorrichtung (34, 86) verbunden ist, wobei die Kopplungsstruktur (44) derart mit Abstand vom Schwenkgelenk (54) ausgebildet ist, dass die rahmenseitige Kopplungsformation (56) und die vorrichtungsseitige Gegenkopplungsformation (58) beide am vorrichtungszugeordneten Gelenkkörper (50) ausgebildet sind, wobei die Funktionsvorrichtung (34, 86) zusätzlich zur Schwenkbarkeit um die Schwenkachse (S) relativ zum Maschinenrahmen (20) um eine zur Schwenkachse (S) orthogonale Neigeachse (N) neigbar ist, wobei die Bodenbearbeitungsmaschine (10) einen Neigeaktuator (43) aufweist, um eine Neigebewegung der Funktionsvorrichtung (34, 86) relativ zum Maschinenrahmen (20) um die Neigeachse (N) aktuatorisch bewirken zu können,
**dadurch gekennzeichnet, dass** der rahmenzugeordnete Gelenkkörper (46) relativ zum Maschinenrahmen (20) unbeweglich mit dem Maschinenrahmen (20) verbunden ist, wobei der Neigeaktuator (43) vollständig vorrichtungsseitig angeordnet ist, so dass er auch im abgekoppelten Zustand mit der Funktionseinrichtung verbunden ist.

2. Mobile Bodenbearbeitungsmaschine (10) nach Anspruch 1,
**dadurch gekennzeichnet, dass** die Funktionsvorrichtung (34, 86) wenigstens eine Vorrichtung aus Bodenmaterial-Transportvorrichtung (34) und Tragevorrichtung (86) umfasst.

3. Mobile Bodenbearbeitungsmaschine (10) nach Anspruch 1 oder 2,
**dadurch gekennzeichnet, dass** die Schwenkachse (S) parallel zu einer Gierachse (Gi) der mobilen Bodenbearbeitungsmaschine (10) verläuft.

4. Mobile Bodenbearbeitungsmaschine (10) nach einem der vorhergehenden Ansprüche,
**dadurch gekennzeichnet, dass** die Bodenbearbeitungsmaschine (10) zur Schwenkverlagerung des vorrichtungszugeordneten Gelenkkörpers (50) relativ zum rahmenzugeordneten Gelenkkörper (46) um die Schwenkachse (S) eine Aktuatorvorrichtung (55) aufweist, wobei sowohl ein rahmenzugeordneter Abstützort (57) als auch ein vorrichtungszugeordneter Anlenkort (59) der Aktuatorvorrichtung (55) auf derselben Seite der Kopplungsstruktur (44) angeordnet sind.

5. Mobile Bodenbearbeitungsmaschine (10) nach einem der vorhergehenden Ansprüche,
**dadurch gekennzeichnet, dass** eine Formation aus Kopplungsformation (56) und Gegenkopplungsformation (58) eine erste Formschluss-Struktur (60), wie Haken (62), Dorn, Kalotte und dergleichen, aufweist, und dass die jeweils andere Formation aus Kopplungsformation (56) und Gegenkopplungsformation (58) eine zweite Formschluss-Struktur (68), wie etwa Stange (66), Balken, Öse, Kugel und dergleichen, aufweist, wobei die erste (60) und die zweite Formschluss-Struktur (68) im betriebsbereit gekoppelten Zustand von Maschinenrahmen (20) und Funktionsvorrichtung (34, 86) in einem in wenigstens einer zur Schwenkachse (S) orthogonalen Richtung wirkenden Formschlusseingriff miteinander stehen.

6. Mobile Bodenbearbeitungsmaschine (10) nach Anspruch 5,
**dadurch gekennzeichnet, dass** die erste Formschluss-Struktur (60) einen Haken (62) mit einem in Richtung der Schwenkachse (S) offenen Hakenmaul (64) aufweist, und dass die zweite Formschluss-Struktur (68) einen quer zur Schwenkachse (S) verlaufenden Stangenabschnitt (66) aufweist, wobei der Stangenabschnitt (66) im betriebsbereit gekoppelten Zustand von Maschinenrahmen (20) und Funktionsvorrichtung (34, 86) vom Haken (62) umgriffen ist.

7. Mobile Bodenbearbeitungsmaschine (10) nach Anspruch 6,
**dadurch gekennzeichnet, dass** der Haken (62) eine quer zur Schwenkachse (S) verlaufende konkave Maulinnenfläche (64a) aufweist, an welcher eine konvexe Außenfläche (66a) des Stangenabschnitts (66) bei hergestelltem Formschlusseingriff zwischen erster (60) und zweiter Formschluss-Struktur (68) flächig anliegt.

8. Mobile Bodenbearbeitungsmaschine (10) nach einem der vorhergehenden Ansprüche,
**dadurch gekennzeichnet, dass** eine Formation aus Kopplungsformation (56) und Gegenkopplungsformation (58) eine Anlage-Struktur (70) mit einer Anlagefläche (71) aufweist, und dass die jeweils andere Formation aus Kopplungsformation (56) und Gegenkopplungsformation (58) eine Kontakt-Struktur (84) mit einer Kontaktfläche (85) aufweist, wobei die Anlage-Struktur (70) und die Kontakt-Struktur (84) im betriebsbereit gekoppelten Zustand von Maschinenrahmen (20) und Funktionsvorrichtung (34, 86) in einem in wenigstens einer quer zur Schwenkachse (S) verlaufenden Richtung wirkenden Anlageeingriff miteinander stehen, in welchem die Anlagefläche (71) und die Kontaktfläche (85) einander berühren.

9. Mobile Bodenbearbeitungsmaschine (10) nach Anspruch 8,
**dadurch gekennzeichnet, dass** die Anlagefläche (71) wenigstens zwei Anlageflächenabschnitte (70a1, 70b1) unterschiedlicher Ausrichtung aufweist, wobei die wenigstens zwei Anlageflächenabschnitte (70a1, 70b1) mit einem Winkelabstand um die Schwenkachse (S) angeordnet sind, und dass die Kontaktfläche (85) wenigstens zwei Kontaktflächenabschnitte (84a1, 84b1) unterschiedlicher Ausrichtung aufweist, wobei die wenigstens zwei Kontaktflächenabschnitte (84a1, 84b1) mit einem Winkelabstand um die Schwenkachse (S) angeordnet sind,

10. Mobile Bodenbearbeitungsmaschine (10) nach Anspruch 9, unter Einbeziehung des Anspruchs 5,
**dadurch gekennzeichnet, dass** im betriebsbereit gekoppelten Zustand von Maschinenrahmen (20) und Funktionsvorrichtung (34, 86) bezüglich einer zur Schwenkachse (S) orthogonalen Richtung beiderseits der ersten und der zweiten Formschluss-Struktur (60) je wenigstens ein Anlageflächenabschnitt (70a1, 70b1) und ein diesen berührender Kontaktflächenabschnitt (84a1, 84b1) gelegen sind.

11. Mobile Bodenbearbeitungsmaschine (10) nach einem der vorhergehenden Ansprüche,
**dadurch gekennzeichnet, dass** sie eine Verriegelungsvorrichtung (72) aufweist, welche veränderbar ist zwischen einem Verriegelungszustand, in welchem sie die mit dem Maschinenrahmen (20) gekoppelte Funktionsvorrichtung (34, 86) gegen ein Lösen vom Maschinenrahmen (20) sichert, und einem Freigabezustand, in welcher sie ein Lösen der Funktionsvorrichtung (34, 86) vom Maschinenrahmen (20) gestattet.

12. Mobile Bodenbearbeitungsmaschine (10) nach Anspruch 11,
**dadurch gekennzeichnet, dass** die Verriegelungsvorrichtung (72) wenigstens ein verlagerbares Verriegelungsglied (74), wie Verriegelungshaken oder/und Verriegelungsbolzen (74), aufweist, welches auf einer Seite der Kopplungsstruktur (44) verlagerbar gelagert ist und welches abhängig von seiner Verlagerungsstellung - bei Betrachtung einer mit dem Maschinenrahmen (20) betriebsbereit gekoppelten Funktionsvorrichtung (34, 86) - eine Sicherungsformation (80a, 80b) auf der jeweils anderen Seite der Kopplungsstruktur (44) hintergreift oder/und durchsetzt.

13. Mobile Bodenbearbeitungsmaschine (10) nach Anspruch 12,
**dadurch gekennzeichnet, dass** der das Verriegelungsglied (74) tragende Gelenkkörper (50) auf derselben Seite der Kopplungsstruktur (44), auf welcher das Verriegelungsglied (74) verlagerbar gelagert ist, eine Führungsformation (78a, 78b) trägt, wobei das Verriegelungsglied (74) dann, wenn es die Sicherungsformation (80a, 80b) auf der anderen Seite der Kopplungsstruktur (44) am selben Gelenkkörper (50) hintergreift oder/und durchsetzt, auch die Führungsformation (78a, 78b) hintergreift oder/und durchsetzt.

14. Mobile Bodenbearbeitungsmaschine (10) nach Anspruch 12 oder 13,
**dadurch gekennzeichnet, dass** das Verriegelungsglied (74) wenigstens auch, vorzugsweise nur, längs der Schwenkachse (S) verlagerbar ist.

15. Mobile Bodenbearbeitungsmaschine (10) nach einem der vorhergehenden Ansprüche,
**dadurch gekennzeichnet, dass** zwischen der Funktionsvorrichtung (34, 86) und dem Maschinenrahmen (20) wenigstens eine elektrische Steckverbindung oder/und wenigstens eine fluidische Schnellkupplung angeordnet ist.

## Claims

1. A mobile earth working machine (10), for instance a road milling machine, recycler, or surface miner, the earth working machine (10), in a reference state ready for earth-working operation, encompassing:
- a machine frame (20);
- a plurality of drive units (16, 18), connected to the machine frame (20), for furnishing ground-based mobility for the earth working machine (10);
- a working apparatus (12), retained on the machine frame (20), for material-removing working of a region of a substrate (U);
- a functional apparatus (34, 86) that is different from the working apparatus (12) and is connected to the machine frame (20) pivotably movably relative to the machine frame (20);
- a pivot joint arrangement, arranged functionally between the machine frame (20) and the functional apparatus (34, 86), having a frame-associated joint element (46) that is connected to the machine frame (20), and having an apparatus-associated joint element (50) that is connected to the frame-associated joint element (46) pivotably by means of a pivot joint (54) around a pivot axis (S) relative to the frame-associated joint element (46) and is connected to the functional apparatus (34, 86),
wherein there is embodied between the machine frame (20) and the functional apparatus (34, 86) a mechanical coupling structure (44) by means of which the functional apparatus (34, 86) is coupled intentionally physically detachably to the machine frame (20); the coupling structure (44) comprising a frame-side coupling configuration (56) that is connected to the machine frame (20), and comprising an apparatus-side counterpart coupling configuration (58) that is connected to the functional apparatus (34, 86); the coupling structure (44) being embodied with a spacing from the pivot joint (54) in such a way that the frame-side coupling configuration (56) and the apparatus-side counterpart coupling configuration (58) are both embodied on the apparatus-associated joint element (50), wherein the functional apparatus (34, 86), in addition to the pivotability relative to the machine frame (20) around the pivot axis (S), is tiltable around a tilt axis (N) that is orthogonal to the pivot axis (S), wherein the earth working machine (10) comprises a tilt actuator (43) in order to bring about in actuator-driven fashion the tilting motion of the functional apparatus (34, 86) relative to the machine frame (20) around the tilt axis (N),
**characterized in that** the frame-associated joint element (46) is connected to the machine frame (20) immovably relative to the machine frame (20), wherein the tilt actuator (43) is arranged entirely on the apparatus side, such that it remains connected to the functional apparatus even in the decoupled state.

2. The mobile earth working machine (10) according to Claim 1,
**characterized in that** the functional apparatus (34, 86) encompasses at least one apparatus from among a substrate material transport apparatus (34) and a carrying apparatus (86).

3. The mobile earth working machine (10) according to Claim 1 or 2,
**characterized in that** the pivot axis (S) extends parallel to a yaw axis (Gi) of the mobile earth working machine (10).

4. The mobile earth working machine (10) according to one of the preceding claims,
**characterized in that** the earth working machine (10) comprises an actuator apparatus (55) for pivoting displacement of the apparatus-associated joint element (50) relative to the frame-associated joint element (46) around the pivot axis (S), both a frame-associated bracing location (57) and an apparatus-associated articulation location (59) of the actuator apparatus (55) being arranged on the same side of the coupling structure (44).

5. The mobile earth working machine (10) according to one of the preceding claims,
**characterized in that** one configuration from among the coupling configuration (56) and counterpart coupling configuration (58) comprises a first positive-engagement structure (60), for instance a hook (62), mandrel, cup, and the like; and the respective other configuration from among the coupling configuration (56) and counterpart coupling configuration (58) comprises a second positive-engagement structure (68), for instance a bar (66), rod, eye, ball, and the like, the first (60) and the second positive-engagement structure (68) being in a positive engagement with one another, which acts at least in a direction orthogonal to the pivot axis (S), when the machine frame (20) and the functional apparatus (34, 86) are the operationally ready coupled state.

6. The mobile earth working machine (10) according to Claim 5,
**characterized in that** the first positive-engagement structure (60) comprises a hook (62) having a hook jaw (64) that is open in the direction of the pivot axis (S); and the second positive-engagement structure (68) comprises a bar portion (66) extending transversely to the pivot axis (S), the hook (62) engaging around the bar portion (66) when the machine frame (20) and functional apparatus (34, 86) are in the operationally ready coupled state.

7. The mobile earth working machine (10) according to Claim 6,
**characterized in that** the hook (62) comprises a concave inner jaw surface (64a) which extends transversely to the pivot axis (S) and against which a convex outer surface (66a) of the bar portion (66) abuts in planar fashion when a positive engagement is established between the first (60) and the second positive engagement structure (68).

8. The mobile earth working machine (10) according to one of the preceding claims,
**characterized in that** one configuration from among the coupling configuration (56) and counterpart coupling configuration (58) comprises an abutment structure (70) having an abutment surface (71); and the respective other configuration from among the coupling configuration (56) and counterpart coupling configuration (58) comprises a contact structure (84) having a contact surface (85), such that when the machine frame (20) and functional apparatus (34, 86) are in the operationally ready coupled state, the abutment structure (70) and the contact structure (84) are in an abutting engagement with one another which acts at least in a direction extending transversely to the pivot axis (S) and in which the abutment surface (71) and the contact surface (85) touch one another.

9. The mobile earth working machine (10) according to Claim 8,
**characterized in that** the abutment surface (71) comprises at least two differently aligned abutment surface portions (70a1, 70b1), the at least two abutment surface portions (70a1, 70b1) being arranged with an angular spacing around the pivot axis (S); and the contact surface (85) comprises at least two differently aligned contact surface portions (84a1, 84b1), the at least two contact surface portions (84a1, 84b1) being arranged with an angular spacing around the pivot axis (S).

10. The mobile earth working machine (10) according to Claim 9, including Claim 5,
**characterized in that** when the machine frame (20) and functional apparatus (34, 86) are in the operationally ready coupled state, at least one respective abutment surface portion (70a1, 70b1) and one contact surface portion (84a1, 84b1) touching it are located, with respect to a direction orthogonal to the pivot axis (S), on both sides of the first and the second positive-engagement structure (60).

11. The mobile earth working machine (10) according to one of the preceding claims,
**characterized in that** it comprises a locking apparatus (72) that is modifiable between a locking state in which it secures the functional apparatus (34, 86), coupled to the machine frame (20), against detachment from the machine frame (20), and a release state in which it permits detachment of the functional apparatus (34, 86) from the machine frame (20).

12. The mobile earth working machine (10) according to Claim 11,
**characterized in that** the locking apparatus (72) comprises at least one displaceable locking member (74), such as a locking hook and/or locking stud (74), which is mounted displaceably on one side of the coupling structure (44) and which, as a function of its displacement position, when considering a functional apparatus (34, 86) coupled to the machine frame (20), engages behind and/or passes through a securing configuration (80a, 80b) on the respective other side of the coupling structure (44).

13. The mobile earth working machine (10) according to Claim 12,
**characterized in that** the joint element (50) that carries the locking member (74) carries a guidance configuration (78a, 78b) on the same side of the coupling structure (44) on which the locking member (74) is displaceably mounted, such that the locking member (74) also engages behind and/or passes through the guidance configuration (78a, 78b) when it engages behind and/or passes through the securing configuration (80a, 80b) on the other side of the coupling structure (44) on the same joint element (50).

14. The mobile earth working machine (10) according to Claim 12 or 13,
**characterized in that** the locking member (74) is at least also, preferably only, displaceable along the pivot axis (S).

15. The mobile earth working machine (10) according to one of the preceding claims,
**characterized in that** at least one electrical plug connection and/or at least one fluidic quick-connect coupling is arranged between the functional apparatus (34, 86) and the machine frame (20).

## Revendications

1. Machine mobile de travail du sol (10), telle qu'une fraiseuse routière, une recycleuse ou une surfaceuse, la machine de travail du sol (10) comprenant, dans un état de référence prêt pour une opération de travail du sol :
- un châssis de machine (20),
- une pluralité de trains de roulement (16, 18) reliés au châssis de machine (20) pour fournir une mobilité liée au sol de la machine de travail du sol (10),
- un dispositif de travail (12) maintenu sur le châssis de machine (20) pour le travail d'une zone d'un sol (U) par enlèvement de matière,
- un dispositif fonctionnel (34, 86) relié au châssis de machine (20) de manière à pouvoir pivoter par rapport au châssis de machine (20), et différent du dispositif de travail (12), et
- un agencement d'articulation pivotante disposé fonctionnellement entre le châssis de machine (20) et le dispositif fonctionnel (34, 86), avec un corps d'articulation (46) associé au châssis, qui est relié au châssis de machine (20), et avec un corps d'articulation (50) associé au dispositif, qui est relié au corps d'articulation (46) associé au châssis au moyen d'une articulation pivotante (54) de manière à pouvoir pivoter autour d'un axe de pivotement (S) par rapport au corps d'articulation (46) associé au châssis, et qui est relié au dispositif fonctionnel (34, 86),
dans lequel une structure d'accouplement mécanique (44) est formée entre le châssis de machine (20) et le dispositif fonctionnel (34, 86), au moyen de laquelle le dispositif fonctionnel (34, 86) est accouplé au châssis de machine (20) de manière physiquement détachable conformément à sa destination, dans lequel la structure d'accouplement (44) présente une formation d'accouplement (56) côté châssis, qui est reliée au châssis de machine (20), et une formation de contre-accouplement (58) côté dispositif, qui est reliée au dispositif fonctionnel (34, 86),
dans lequel la structure d'accouplement (44) est réalisée à une distance telle de l'articulation pivotante (54) que la formation d'accouplement (56) côté châssis et la formation de contre-accouplement (58) côté dispositif sont toutes deux réalisées sur le corps d'articulation (50) associé au dispositif, dans lequel le dispositif fonctionnel (34, 86) peut être incliné, en plus de la possibilité de pivotement autour de l'axe de pivotement (S), par rapport au châssis de machine (20), autour d'un axe d'inclinaison (N) orthogonal à l'axe de pivotement (S), dans lequel la machine de travail du sol (10) présente un actionneur d'inclinaison (43) afin de pouvoir provoquer par actionnement un mouvement d'inclinaison du dispositif fonctionnel (34, 86) par rapport au châssis de machine (20) autour de l'axe d'inclinaison (N),
**caractérisé en ce que** le corps d'articulation (46) associé au châssis est relié au châssis de machine (20) de manière immobile par rapport au châssis de machine (20), dans lequel l'actionneur d'inclinaison (43) est disposé entièrement du côté du dispositif, de sorte qu'il est également relié au dispositif fonctionnel à l'état désaccouplé.

2. Machine mobile de travail du sol (10) selon la revendication 1,
**caractérisée en ce que** le dispositif fonctionnel (34, 86) comprend au moins un dispositif constitué d'un dispositif de transport de matériau du sol (34) et d'un dispositif de support (86).

3. Machine mobile de travail du sol (10) selon la revendication 1 ou 2,
**caractérisée en ce que** l'axe de pivotement (S) est parallèle à un axe de lacet (Gi) de la machine mobile de travail du sol (10).

4. Machine mobile de travail du sol (10) selon l'une des revendications précédentes,
**caractérisée en ce que** la machine de travail du sol (10) présente un dispositif d'actionnement (55) pour le déplacement pivotant du corps d'articulation (50) associé au dispositif par rapport au corps d'articulation (46) associé au châssis autour de l'axe de pivotement (S), dans lequel un lieu d'appui (57) associé au châssis ainsi qu'un lieu d'articulation (59) associé au dispositif du dispositif d'actionnement (55) sont disposés du même côté de la structure d'accouplement (44).

5. Machine mobile de travail du sol (10) selon l'une des revendications précédentes,
**caractérisé en ce qu'**une formation parmi la formation d'accouplement (56) et la formation de contre-accouplement (58) présente une première structure à engagement positif (60), telle qu'un crochet (62), un mandrin, une calotte et similaire, et **en ce que** l'autre formation parmi la formation d'accouplement (56) et la formation de contre-accouplement (58) présente une deuxième structure à engagement positif (68), telle qu'une barre (66), une poutre, un oeillet, une bille et similaire, dans lequel la première (60) et la deuxième structure à engagement positif (68) sont en engagement positif l'une avec l'autre, agissant dans au moins une direction orthogonale à l'axe de pivotement (S), lorsque le châssis de machine (20) et le dispositif fonctionnel (34, 86) sont accouplés en état de fonctionnement.

6. Machine mobile de travail du sol (10) selon la revendication 5,
**caractérisée en ce que** la première structure à engagement positif (60) présente un crochet (62) avec une bouche de crochet (64) ouverte en direction de l'axe de pivotement (S), et **en ce que** la deuxième structure à engagement positif (68) présente un tronçon de tige (66) s'étendant transversalement à l'axe de pivotement (S), dans lequel le tronçon de tige (66) est entouré par le crochet (62) lorsque le châssis de machine (20) et le dispositif fonctionnel (34, 86) sont accouplés en état de fonctionnement.

7. Machine mobile de travail du sol (10) selon la revendication 6,
**caractérisée en ce que** le crochet (62) présente une surface intérieure de mâchoire concave (64a) s'étendant transversalement à l'axe de pivotement (S), sur laquelle une surface extérieure convexe (66a) du tronçon de tige (66) s'applique à plat lorsque l'engagement positif est établi entre la première (60) et la deuxième structure à engagement positif (68).

8. Machine mobile de travail du sol (10) selon l'une des revendications précédentes,
**caractérisée en ce qu'**une formation parmi la formation d'accouplement (56) et la formation de contre-accouplement (58) présente une structure d'appui (70) avec une surface d'appui (71), et **en ce que** l'autre formation parmi la formation d'accouplement (56) et la formation de contre-accouplement (58) présente une structure de contact (84) avec une surface de contact (85), dans lequel la structure d'appui (70) et la structure de contact (84) sont en état accouplé de fonctionnement du châssis de machine (20) et du dispositif fonctionnel (34, 86), en prise d'appui l'une avec l'autre agissant dans au moins une direction s'étendant transversalement à l'axe de pivotement (S), dans laquelle la surface d'appui (71) et la surface de contact (85) sont en contact l'une avec l'autre

9. Machine mobile de travail du sol (10) selon la revendication 8,
**caractérisée en ce que** la surface d'appui (71) présente au moins deux sections de surface d'appui (70a1, 70b1) d'orientation différente, dans lequel les au moins deux sections de surface d'appui (70a1, 70b1) sont disposées avec un écart angulaire autour de l'axe de pivotement (S), et **en ce que** la surface de contact (85) présente au moins deux sections de surface de contact (84a1, 84b1) d'orientation différente, dans lequel les au moins deux sections de surface de contact (84al, 84b1) sont disposées avec un écart angulaire autour de l'axe de pivotement (S).

10. Machine mobile de travail du sol (10) selon la revendication 9, en tenant compte de la revendication 5,
**caractérisée en ce que,** lorsque le châssis de machine (20) et le dispositif fonctionnel (34, 86) sont en état accouplé de fonctionnement, au moins une section de surface d'appui (70a1, 70b1) et une section de surface de contact (84a1, 84b1) en contact avec celle-ci sont situées respectivement de part et d'autre de la première et de la deuxième structure à engagement positif (60) par rapport à une direction orthogonale à l'axe de pivotement (S).

11. Machine mobile de travail du sol (10) selon l'une des revendications précédentes,
**caractérisée en ce qu'**elle comporte un dispositif de verrouillage (72) qui est modifiable entre un état de verrouillage dans lequel il empêche le dispositif fonctionnel (34, 86) accouplé au châssis de machine (20) de se détacher du châssis de machine (20), et un état de libération dans lequel il permet de détacher le dispositif fonctionnel (34, 86) du châssis de machine (20).

12. Machine mobile de travail du sol (10) selon la revendication 11,
**caractérisée en ce que** le dispositif de verrouillage (72) comporte au moins un membre de verrouillage (74) déplaçable, tel que crochet de verrouillage ou/et boulon de verrouillage (74), qui est monté de manière à pouvoir être déplacé d'un côté de la structure d'accouplement (44) et qui, en fonction de sa position de déplacement, lorsqu'on observe un dispositif fonctionnel (34, 86) en état accouplé de fonctionnement au châssis de machine (20), saisit par l'arrière ou/et traverse une station de sécurité (80a, 80b) de l'autre côté respectif de la structure d'accouplement (44).

13. Machine mobile de travail du sol (10) selon la revendication 12,
**caractérisée en ce que** le corps d'articulation (50) portant le membre de verrouillage (74) présente une formation de guidage (78a, 78b) sur le même côté de la structure d'accouplement (44) sur laquelle le membre de verrouillage (74) est monté de manière à pouvoir se déplacer, dans lequel le membre de verrouillage (74), lorsqu'il saisit par l'arrière ou/et traverse la formation de sécurité (80a, 80b) sur l'autre côté de la structure d'accouplement (44) sur le même corps d'articulation (50), saisit également par l'arrière ou/et traverse la formation de guidage (78a, 78b).

14. Machine mobile de travail du sol (10) selon la revendication 12 ou 13, **caractérisée en ce que** le membre de verrouillage (74) peut être déplacé au moins également, de préférence uniquement, le long de l'axe de pivotement (S).

15. Machine mobile de travail du sol (10) selon l'une des revendications précédentes, **caractérisée en ce qu'**entre le dispositif fonctionnel (34, 86) et le châssis de machine (20) est disposé au moins un connecteur électrique ou/et au moins un raccord rapide fluidique.
